# EUROPEAN PATENT APPLICATION

(11) **EP 4 694 472 A1**
(43) Date of publication of application: **11.02.2026**
(21) Application number: 23929272.5
(22) Date of filing: 29.03.2023
(51) Int. Cl.: H04W 72/1268

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/084898
(87) International publication number: WO 2024/197674

(57) **Abstract**

The present disclosure provides an information transmission method and apparatus, and a storage medium. The method comprises: if uplink information to be sent needs to occupy multiple time units, and the multiple time units include at least two types of time units, determining from the multiple time units a first time unit for uplink transmission; and on the first time unit, sending the uplink information to a base station. The present disclosure can ensure that a terminal and a base station have a consistent understanding of time domain resources for transmitting uplink information, thereby improving the reliability of uplink transmission and the reliability of full-duplex communication.

## Description

### TECHNICAL FIELD

The present disclosure relates to the field of communication, and in particular, to an information transmission method and apparatus, and a storage medium.

### BACKGROUND

Full-duplex solutions will be studied in a full-duplex enhancement project of Release 18 (Rel-18). A network-side device can simultaneously receive and send data within one time unit.

However, when a terminal needs to occupy multiple time units to send uplink information, where the multiple time units include different types of time units, the terminal cannot determine in which type of time unit the uplink information shall be transmitted, which may cause the terminal and the base station to understand time units occupied by the uplink information differently, and reliability of full-duplex communication cannot be ensured.

### SUMMARY

To solve problems in the related arts, embodiments of the present disclosure provide an information transmission method and apparatus, and a storage medium.

According to a first aspect of the embodiments of the present disclosure, an information transmission method is provided, performed by a terminal, including:
in response to determining that to-be-sent uplink information needs to occupy multiple time units and the multiple time units include at least two types of time units, determining, from the multiple time units, a first time unit used for uplink transmission; and
sending the uplink information to a base station in the first time unit.

Optionally, the at least two types of time units include:
a first-type time unit, configured with an uplink sub-band, a transmission direction thereof being downlink or flexible; and
a second-type time unit, configured with no uplink sub-band, a transmission direction thereof being uplink or flexible.

Optionally, determining, from the multiple time units, the first time unit used for uplink transmission includes any one of:
determining the second-type time unit in the multiple time units as the first time unit;
determining the first-type time unit and the second-type time unit in the multiple time units as the first time unit; and
determining the first-type time unit and the second-type time unit in the multiple time units as available time units, and determining the first time unit from the available time units.

Optionally, the method further includes:
receiving first indication information sent by the base station, where the first indication information indicates that the first time unit includes any one of:
the second-type time unit; and
the first-type time unit and the second-type time unit.

Optionally, the method further includes:
receiving second indication information sent by the base station, where the second indication information indicates that an available time unit includes any one of:
the second-type time unit; and
the first-type time unit and the second-type time unit;
where determining, from the multiple time units, the first time unit used for uplink transmission includes:
determining, from the multiple time units, the available time unit indicated by the second indication information as the first time unit.

Optionally, determining, from the multiple time units, the first time unit used for uplink transmission includes:
determining, from the multiple time units, the first time unit based on associated information of the uplink information.

Optionally, the associated information includes a number of time units that need to be occupied for repeated transmission of the uplink information;
where determining, from the multiple time units, the first time unit based on the associated information of the uplink information includes any one of:
in response to determining the number of time units being less than a preset number, determining the second-type time unit as the first time unit;
in response to determining the number of time units being greater than or equal to the preset number, determining the first-type time unit and the second-type time unit as the first time unit; and
in response to determining the number of time units being greater than or equal to the preset number, determining the first-type time unit and the second-type time unit as available time units, and then determining the first time unit from the available time units.

Optionally, the associated information includes transmission type information of the uplink information;
where determining, from the multiple time units, the first time unit based on the associated information of the uplink information includes:
determining, based on a correspondence between the transmission type information and types of time units, a type of time units corresponding to the transmission type information; and
determining, from the multiple time units, a time unit belonging to the type of time units as the first time unit.

Optionally, determining, from the available time units, the first time unit includes any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

According to a second aspect of the embodiments of the present disclosure, an information transmission method is provided, performed by a base station, including:
in response to determining that uplink information to be sent by a terminal needs to occupy multiple time units and the multiple time units include at least two types of time units, determining, from the multiple time units, a first time unit used for uplink transmission by the terminal; and
receiving the uplink information sent by the terminal in the first time unit.

Optionally, the at least two types of time units include:
a first-type time unit, configured with an uplink sub-band, a transmission direction thereof being downlink or flexible; and
a second-type time unit, configured with no uplink sub-band, a transmission direction thereof being uplink or flexible.

Optionally, determining, from the multiple time units, the first time unit used for uplink transmission by the terminal includes any one of:
determining the second-type time unit in the multiple time units as the first time unit;
determining the first-type time unit and the second-type time unit in the multiple time units as the first time unit; and
determining the first-type time unit and the second-type time unit in the multiple time units as available time units, and determining the first time unit from the available time units.

Optionally, the method further includes:
sending first indication information to the terminal, where the first indication information indicates that the first time unit includes any one of:
the second-type time unit; and
the first-type time unit and the second-type time unit.

Optionally, the method further includes:
sending second indication information to the terminal, where the second indication information indicates that an available time unit includes any one of:
the second-type time unit; and
the first-type time unit and the second-type time unit;
where determining, from the multiple time units, the first time unit used for uplink transmission by the terminal includes:
   determining, from the multiple time units, the available time unit indicated by the second indication information as the first time unit.

Optionally, where determining, from the multiple time units, the first time unit used for uplink transmission by the terminal includes:
determining, from the multiple time units, the first time unit based on associated information of the uplink information.

Optionally, the associated information includes a number of time units that need to be occupied for repeated transmission of the uplink information;
where determining, from the multiple time units, the first time unit based on the associated information of the uplink information includes any one of:
in response to determining the number of time units being less than a preset number, determining the second-type time unit as the first time unit;
in response to determining the number of time units being greater than or equal to the preset number, determining the first-type time unit and the second-type time unit as the first time unit; and
in response to determining the number of time units being greater than or equal to the preset number, determining the first-type time unit and the second-type time unit as available time units, and then determining the first time unit from the available time units.

Optionally, the associated information includes transmission type information of the uplink information;
where determining, from the multiple time units, the first time unit based on the associated information of the uplink information includes:
determining, based on a correspondence between the transmission type information and types of time units, a type of time units corresponding to the transmission type information; and
determining, from the multiple time units, a time unit belonging to the type of time units as the first time unit.

Optionally, determining, from the available time units, the first time unit includes any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

According to a third aspect of the embodiments of the present disclosure, an information transmission apparatus is provided, applied to a terminal, including:
a first determining module, configured to, in response to determining that to-be-sent uplink information needs to occupy multiple time units and the multiple time units include at least two types of time units, determine, from the multiple time units, a first time unit used for uplink transmission; and
a first sending module, configured to send the uplink information to a base station in the first time unit.

According to a fourth aspect of the embodiments of the present disclosure, an information transmission apparatus is provided, applied to a base station, including:
a second determining module, configured to, in response to determining that uplink information to be sent by a terminal needs to occupy multiple time units and the multiple time units include at least two types of time units, determine, from the multiple time units, a first time unit used for uplink transmission by the terminal; and
a first receiving module, configured to receive the uplink information sent by the terminal in the first time unit.

According to a fifth aspect of the embodiments of the present disclosure, a computer-readable storage medium is provided, storing a computer program, where the computer program is used for performing the information transmission method of any one of the above terminal side.

According to a sixth aspect of the embodiments of the present disclosure, a computer-readable storage medium is provided, storing a computer program, where the computer program is used for performing the information transmission method of any one of the above base station side.

According to a seventh aspect of the embodiments of the present disclosure, an information transmission device is provided, including:
one or more processors;
a memory for storing a processor-executable instruction;
where the processor is configured to perform the information transmission method according to any one of the above terminal side.

According to an eighth aspect of the embodiments of the present disclosure, an information transmission device is provided, including:
one or more processors;
a memory for storing a processor-executable instruction;
where the processor is configured to perform the information transmission method according to any one of the above base station side.

The technical solutions provided by the embodiments of the present disclosure may include following beneficial effects.

In the present disclosure, when the terminal determines that the to-be-sent uplink information needs to occupy multiple time units, and the multiple time units include at least two types of time units, the terminal may determine, from the multiple time units, the first time unit used for uplink transmission, and send the uplink information to the base station in the first time unit. Similarly, the base station also determines the first time unit in a same manner and receives the uplink information in the first time unit, to ensure that the terminal and the base station have consistent understanding of a time-domain resource for transmitting the uplink information, thereby improving reliability of uplink transmission and reliability of full-duplex communication.

It shall be noted that the above general description and the following detailed description are examples and explanatory only and are not restrictive of the present disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of an unpaired spectrum according to an example embodiment.
FIG. 2 is a schematic flowchart of an information transmission method according to an example embodiment.
FIG. 3 is a schematic flowchart of another information transmission method according to an example embodiment.
FIG. 4A is a schematic flowchart of another information transmission method according to an example embodiment.
FIG. 4B is a schematic flowchart of another information transmission method according to an example embodiment.
FIG. 5 is a schematic flowchart of another information transmission method according to an example embodiment.
FIG. 6 is a schematic flowchart of another information transmission method according to an example embodiment.
FIG. 7 is a schematic flowchart of another information transmission method according to an example embodiment.
FIG. 8A is a schematic flowchart of another information transmission method according to an example embodiment.
FIG. 8B is a schematic flowchart of another information transmission method according to an example embodiment.
FIG. 9 is a schematic flowchart of another information transmission method according to an example embodiment.
FIG. 10A is a schematic flowchart of another information transmission method according to an example embodiment.
FIG. 10B is a schematic flowchart of another information transmission method according to an example embodiment.
FIG. 10C is a schematic flowchart of another information transmission method according to an example embodiment.
FIG. 11A to FIG. 11C are schematic diagrams of frequency-domain resource relationship between uplink and downlink transmissions according to an example embodiment.
FIG. 12 is a schematic diagram of another unpaired spectrum according to an example embodiment.
FIG. 13A and FIG. 13B are schematic diagrams of time-domain resources for transmitting uplink information according to an example embodiment.
FIG. 14A and FIG. 14B are schematic diagrams of time-domain resources for transmitting uplink information according to an example embodiment.
FIG. 15A and FIG. 15B are schematic diagrams of time-domain resources for transmitting uplink information according to an example embodiment.
FIG. 16 is a block diagram of an information transmission apparatus according to an example embodiment.
FIG. 17 is a block diagram of another information transmission apparatus according to an example embodiment.
FIG. 18 is a schematic structural diagram of an information transmission device according to an example embodiment.
FIG. 19 is a schematic structural diagram of another information transmission device according to an example embodiment.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations set forth in the following description of example embodiments do not represent all implementations consistent with the present disclosure. Instead, they are merely examples of apparatuses and methods consistent with aspects related to the present disclosure as recited in the appended claims.

The terminology used herein is for the purpose of describing particular embodiments only and is not intended to be limiting of the disclosure. The singular forms "a", "said" and "the" used in the present disclosure and the appended claims are also intended to include plural forms, unless the context clearly indicates other meanings. It will also be understood that the term "and/or" as used herein refers to and encompasses any and all possible combinations of at least one of the associated listed items.

It should be understood that although the terms first, second, third, etc. may be used in the present disclosure to describe various information, the information should not be limited to these terms. These terms are only used to distinguish a same type of information from each other. For example, without departing from the scope of the present disclosure, "first message" may also be referred to as "second message", and similarly, "second message" may also be referred to as "first message". Depending on the context, the word "if" as used herein may be interpreted as "when" or "upon" or "in response to determining".

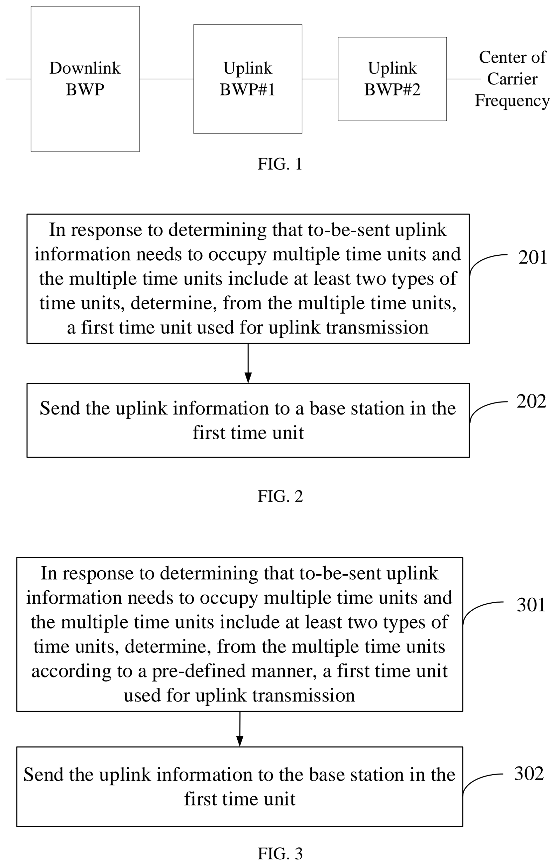

In a new radio (NR) system, for an unpaired spectrum, center frequencies of an uplink bandwidth part (UL BWP) and a downlink bandwidth part (DL BWP) need to be aligned, but the UL BWP and the DL BWP may be configured to occupy different frequency-domain resource ranges, as shown in FIG. 1.

The UL BWP is configured only in an uplink time unit, for example, an uplink slot, that is, there is no UL BWP in a downlink slot.

In addition, the base station may indicate, by using a frequency-domain resource allocation (FDRA) field included in downlink control information (DCI), the frequency-domain resource occupied by the uplink information, where the FDRA field is used to indicate the frequency-domain resource occupied by the uplink information in the UL BWP.

Alternatively, when the base station configures transmission of Type 1 Configured Grant (Type1 CG), a frequency-domain resource occupied by corresponding uplink information also needs to be configured in the UL BWP.

For the transmission of other types of uplink information, the occupied frequency-domain resources also need to be configured within the range of the UL BWP.

Because the DL BWP and the UL BWP are not necessarily aligned in frequency domain, for example, as shown in FIG. 1, when uplink information needs to be transmitted in different slots, if the slots include multiple types of slots, the multiple types of slots may include at least a first-type slot and a second-type slot, where the first-type slot may be a downlink slot configured with an uplink sub-band, or the first-type slot may be a flexible slot configured with an uplink sub-band, and the second-type slot may be an uplink slot configured with no uplink sub-band, or the second-type slot may be a flexible slot configured with no uplink sub-band. In the first-type slot, an available resource used by the terminal for uplink transmission belongs to a frequency-domain resource range included in the uplink sub-band, and in the second-type slot, an available resource used by the terminal for uplink transmission belongs to a frequency-domain resource range included in the uplink BWP, where the frequency-domain resource range included in the uplink sub-band may be different from the frequency-domain resource range included in the uplink BWP, that is, available frequency-domain resources in respective types of slot are different. In this case, there is no clear solution about how the terminal and the base station determine the slot used to transmit the uplink information.

To resolve the foregoing technical problem, the present disclosure provides the following information transmission method and apparatus, and a storage medium. When a terminal determines that to-be-sent uplink information needs to occupy multiple time units, and the multiple time units include at least two types of time units, the terminal may determine, from the multiple time units, a first time unit used for uplink transmission, and send the uplink information to a base station in the first time unit. Similarly, the base station also determines the first time unit in a same manner and receives the uplink information in the first time unit, to ensure that the terminal and the base station have consistent understanding, thereby improving reliability of full-duplex communication.

The following describes the information transmission method provided in the present disclosure from a terminal side. It should be noted that, in the present disclosure, the uplink information transmitted by the terminal includes but is not limited to an uplink channel and/or an uplink signal, where the uplink channel includes but is not limited to at least one of: a physical uplink shared channel (PUSCH) and a physical uplink control channel (PUCCH), and the uplink signal includes but is not limited to a sounding reference signal (SRS).

Accordingly, the information transmission solution provided by the present disclosure is applicable to a terminal performing at least one of following uplink transmissions: Type A repetition in Release 16 (Rel-16); Type A repetition in Release 17(Rel-17); Type B repetition; Transport Block Processing over Multi-Slot PUSCH (TBoMS); multiple PUSCHs scheduled by one DCI; PUCCH with repetition enabled; Type1 CG PUSCH; Type2 Configured Grant, (Type2 CG) PUSCH; periodically-transmitted PUCCH; and periodically-transmitted SRS.

An embodiment of the present disclosure provides an information transmission method, as shown in FIG. 2, FIG. 2 is a flowchart of an information transmission method according to an embodiment, which may be performed by a terminal, and the method may include following steps 201 and 202.

In step 201, in response to determining that to-be-sent uplink information needs to occupy multiple time units and the multiple time units include at least two types of time units, determining, from the multiple time units, a first time unit used for uplink transmission.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a sub-band full duplex (SBFD) time unit, and the SBFD time unit may take a unit of orthogonal frequency division multiplexing (OFDM) symbol, a span, a slot, etc., which is not limited in the present disclosure. One span includes multiple consecutive symbols.

The SBFD time unit may be a downlink time unit configured with an uplink sub-band, or may be a flexible time unit configured with an uplink sub-band.

For example, the second-type time unit may be defined as a non-sub-band full duplex (non-SBFD) time unit. The non-SBFD time unit may take a unit of OFDM symbol, span, slot, etc., which is not limited in the present disclosure.

The non-SBFD time unit may be a time unit in which a frequency-domain resource included in the uplink BWP can be used.

In an example, the non-SBFD time unit is an uplink time unit configured with no uplink sub-band, although no uplink sub-band is configured in the uplink time unit, the uplink BWP configured by the base station is located in the uplink time unit, and therefore, in the uplink time unit configured with no uplink sub-band, the terminal may perform uplink transmission by using a frequency-domain resource included in the uplink BWP.

In another example, the non-SBFD time unit may be a flexible time unit for which no uplink sub-band is configured. The transmission direction of the flexible time unit may be configured again by the base station according to a scheduling situation, and therefore, the base station may configure the transmission direction of the flexible time unit as uplink according to the scheduling, so that the terminal may perform uplink transmission on the flexible time unit configured with no uplink sub-band by using the frequency-domain resource included in the uplink BWP. The terminal may determine, in the at least two types of time units, the first time unit in which the uplink transmission is located. Optionally, the first time unit may include a second-type time unit, or include both a first-type time unit and a second-type time unit. Alternatively, the terminal may first determine the first-type time unit and the second-type time unit as available time units, and then determine one type of the available time units as the first time unit. A specific determining manner is described in following embodiments, which will not be described herein.

In step 202, sending the uplink information to a base station in the first time unit.

In an embodiment of the present disclosure, after determining the first time unit, the terminal may send the uplink information to the base station in the first time unit.

In a possible implementation, the first time unit includes a first-type time unit, that is, includes a SBFD time unit, and because an uplink sub-band is configured in the SBFD time unit, the terminal may transmit, in the first-type time unit, uplink information by using a frequency-domain resource included in the uplink sub-band.

In another possible implementation, the first time unit includes a second-type time unit, that is, includes a non-SBFD time unit, and although no uplink sub-band is configured in the non-SBFD time unit, the non-SBFD time unit is a time unit that can use the frequency-domain resource included in the uplink BWP, and therefore, the terminal may transmit the uplink information in the second-type time unit by using the frequency-domain resource included in the uplink BWP.

In another possible implementation, the first time unit includes a first-type time unit and a second-type time unit, and the terminal may transmit, in the first-type time unit, the uplink information by using the frequency-domain resource included in the uplink sub-band, and transmit, in the second-type time unit, the uplink information by using the frequency-domain resource included in the uplink BWP.

In the foregoing embodiment, the terminal may determine the first time unit used for uplink transmission, and send the uplink information to the base station in the first time unit, thereby improving reliability of full-duplex communication.

In some optional embodiments, as shown in FIG. 3, FIG. 3 is a flowchart of an information transmission method according to an embodiment, which may be performed by a terminal, and the method may include following steps 301 and 302.

In step 301, in response to determining that to-be-sent uplink information needs to occupy multiple time units and the multiple time units include at least two types of time units, determining, from the multiple time units according to a pre-defined manner, a first time unit used for uplink transmission.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

In an embodiment of the present disclosure, the pre-defined manner may include, but is not limited to, a manner specified in a protocol.

For example, the protocol may directly specify an available time unit and/or an unavailable time unit, for example, specify at least one of: the SBFD time unit is an unavailable time unit; the SFBD time unit is an available time unit; and the non-SBFD time unit is an available time unit. The available time unit means that the terminal can use this type of time unit for uplink transmission, and the unavailable time unit means that the terminal cannot use this type of time unit for uplink transmission.

Correspondingly, assuming that the protocol specifies that the SBFD time unit is an unavailable time unit, that is, the protocol specifies that the first-type time unit is an unavailable time unit, the terminal may determine the second-type time unit as the first time unit from the multiple time units.

For example, for a downlink slot configured with an uplink sub-band, the protocol specifies that a SBFD time unit is an unavailable time unit, the terminal determines that the downlink slot cannot be used for uplink transmission, and the terminal may use a non-SBFD time unit for uplink transmission, that is, determine a second-type time unit as the first time unit.

For another example, for a flexible slot configured with an uplink sub-band, a protocol specifies that a SBFD time unit is an unavailable time unit, the terminal determines not to perform uplink transmission in the flexible slot, and the terminal may use a non-SBFD time unit for uplink transmission, that is, determine a second-type time unit as the first time unit.

Assuming that the protocol specifies that the SBFD time unit is an available time unit, that is, the protocol specifies that the first-type time unit is an available time unit, the terminal may determine the first-type time unit and the second-type time unit as the first time unit from the multiple time units.

Assuming that the protocol specifies that the non-SBFD time unit is an available time unit, that is, the protocol specifies that the second-type time unit is the available time unit, the terminal may determine the second-type time unit as the first time unit from the multiple time units.

Assuming that the protocol specifies that the SBFD time unit and the non-SFBD time unit are available time units, the terminal may determine the first-type time unit and the second-type time unit as the first time unit from the multiple time units.

Assuming that the protocol specifies that the SFBD time unit is an available time unit, that is, the protocol specifies that the first-type time unit is an available time unit, the terminal may determine the first-type time unit as the available time unit from the multiple time units, and then determine the available time unit as the first time unit.

Assuming that the protocol specifies that the SFBD time unit is an available time unit, that is, the protocol specifies that the first-type time unit is an available time unit, the terminal may determine the first-type time unit and the second-type time unit as available time units from the multiple time units, and then determine the first time unit from the available time units.

Assuming that the protocol specifies that the non-SFBD time unit is an available time unit, that is, the protocol specifies that the second-type time unit is an available time unit, the terminal may determine the second-type time unit as the available time unit from the multiple time units, and then determine the available time unit as the first time unit.

The above is only example description, and the terminal directly determines the first time unit or determines the available time unit in a pre-defined manner should fall within the protection scope of the present disclosure.

In an example, in a case that the terminal determines both the first-type time unit and the second-type time unit as available time units, the terminal may determine the first time unit based on whether the frequency-domain resource occupied by the uplink information is within the frequency-domain resource range occupied by the uplink sub-band.

For example, if and only if the frequency-domain resource configured by the base station for the terminal to transmit the uplink information is within the frequency-domain resource range occupied by the uplink sub-band, the terminal may determine the first-type time unit as the first time unit from the available time units.

For example, the terminal may perform uplink transmission in the SBFD time unit and the non-SBFD time unit. Further, if and only if the frequency-domain resource configured by the base station for the terminal to transmit the uplink information is completely within the frequency-domain resource range occupied by the uplink sub-band, the terminal determines the SBFD time unit as the first time unit.

For example, if any frequency-domain resource occupied by the uplink information configured by the base station for the terminal is outside the frequency-domain resource range occupied by the uplink sub-band, the terminal may determine the second-type time unit as the first time unit from the available time units.

For example, the terminal may perform uplink transmission in the SBFD time unit and the non-SBFD time unit. Further, if and only if some of the occupied frequency-domain resources configured by the base station for the terminal to transmit the uplink information are outside the frequency-domain resource range occupied by the uplink sub-band, the terminal may determine the non-SBFD time unit as the first time unit.

In step 302, sending the uplink information to the base station in the first time unit.

An implementation of step 302 is similar to that of step 202, and details will not be repeated herein.

In the foregoing embodiment, the terminal may determine the first time unit used for uplink transmission according to a pre-defined manner, and send the uplink information to the base station in the first time unit, thereby improving reliability of full-duplex communication.

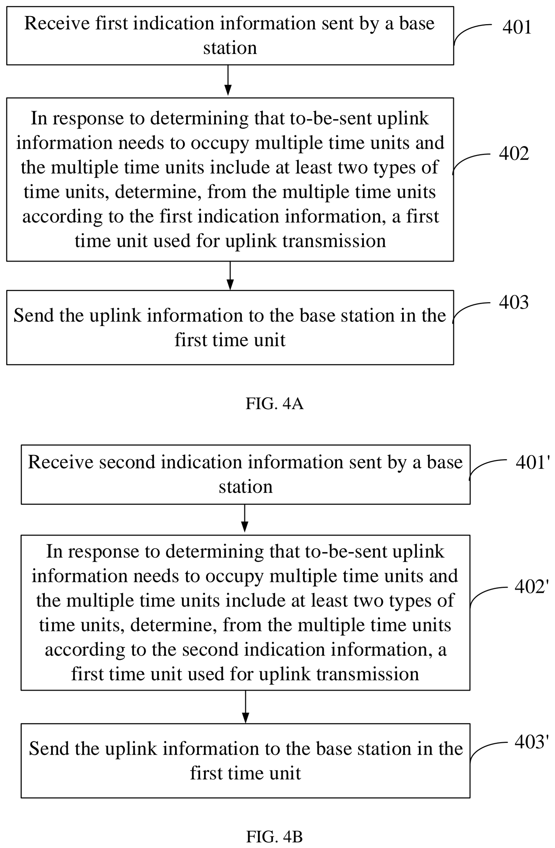

In some optional embodiments, as shown in FIG. 4A, FIG. 4A is a flowchart of an information transmission method according to an embodiment, which may be performed by a terminal, and the method may include following steps 401-403.

In step 401, receiving first indication information sent by a base station.

In an embodiment of the present disclosure, the first indication information may indicate that the first time unit includes any one of: the second-type time unit; and the first-type time unit and the second-type time unit.

In an example, the terminal may receive the first indication information sent by the base station by using at least one of following messages: a radio resource control (RRC) message, DCI, and a media access control element (MAC CE).

In an example, the first indication information may occupy one bit, for example, a bit value of the bit being 1 indicates that the first time unit includes only the non-SBFD time unit; or a bit value of the bit being 0 indicates that the first time unit type includes the SBFD time unit and the non-SBFD time unit.

Alternatively, the first indication information may occupy one bit, for example, a bit value of the bit being 1 indicates that the first time unit includes the SBFD time unit and the non-SBFD time unit; or a bit value of the bit being 0 indicates that the first time unit type includes only the non-SBFD time unit.

The foregoing is merely an example for description, and solutions in which the first indication information indicates other content so that the terminal determines the first time unit for uplink transmission shall fall within the protection scope of the present disclosure.

In step 402, in response to determining that to-be-sent uplink information needs to occupy multiple time units and the multiple time units include at least two types of time units, determining, from the multiple time units according to the first indication information, a first time unit used for uplink transmission.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the second-type time unit may be defined as a non-SBFD time unit.

In a possible implementation, if the first indication information indicates that the first time unit includes the second-type time unit, the terminal determines the second-type time unit in the multiple time units as the first time unit.

In another possible implementation, if the first indication information indicates that the first time unit includes the first-type time unit and the second-type time unit, the terminal determines the first-type time unit and the second-type time unit in the multiple time units as the first time unit.

The above is only an example description, and the solution that the terminal determines the first time unit based on the first indication information sent by the base station should fall within the protection scope of the sent disclosure.

In step 403, sending the uplink information to the base station in the first time unit.

An implementation of step 403 is similar to that of step 202, and details will not be repeated herein.

In the foregoing embodiment, the terminal may determine the first time unit used for uplink transmission according to the first indication information sent by the base station, and send the uplink information to the base station in the first time unit, thereby improving reliability of full-duplex communication.

In some optional embodiments, as shown in FIG. 4B, FIG. 4B is a flowchart of an information transmission method according to an embodiment, which may be performed by a terminal, and the method may include following steps 401'-403'.

In step 401', receiving second indication information sent by a base station.

In an embodiment of the present disclosure, the second indication information indicates that an available time unit includes any one of: the second-type time unit; and the first-type time unit and the second-type time unit.

In an example, the terminal may receive the second indication information sent by the base station by using at least one of following messages: an RRC message, DCI, and a MAC CE.

In an example, the second indication information may occupy one bit, for example, a bit value of the bit being 1 indicates that the available time unit includes only the non-SBFD time unit; or a bit value of the bit being 0 indicates that the available time unit type includes the SBFD time unit and the non-SBFD time unit.

Alternatively, the second indication information may occupy one bit, for example, a bit value of the bit being 1 indicates that the available time unit includes the SBFD time unit and the non-SBFD time unit; or a bit value of the bit being 0 indicates that the available time unit type includes only the non-SBFD time unit.

In step 402', in response to determining that to-be-sent uplink information needs to occupy multiple time units and the multiple time units include at least two types of time units, determining, from the multiple time units according to the second indication information, a first time unit used for uplink transmission.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the second-type time unit may be defined as a non-SBFD time unit.

In a possible implementation, the terminal may determine an available time unit indicated by the second indication information as the first time unit.

In an example, if the second indication information indicates that the available time unit includes the second-type time unit, the terminal determines the second-type time unit in the multiple time units as the first time unit.

In an example, if the second indication information indicates that the available time unit includes the first-type time unit and the second-type time unit, the terminal determines the first-type time unit and the second-type time unit in the multiple time units as the first time unit.

In another possible implementation, if the second indication information indicates that the available time unit includes the first-type time unit and the second-type time unit, the terminal may determine the first time unit from the available time unit.

For example, if and only if the frequency-domain resource configured by the base station for the terminal to transmit the uplink information is within the frequency-domain resource range occupied by the uplink sub-band, the terminal may determine the first-type time unit as the first time unit from the available time units.

For example, if any frequency-domain resource occupied by the uplink information configured by the base station for the terminal is outside the frequency-domain resource range occupied by the uplink sub-band, the terminal may determine the second-type time unit as the first time unit from the available time units.

The above is only an example description, and the solution that the terminal determines the first time unit based on the second indication information sent by the base station should fall within the protection scope of the present disclosure.

In step 403', sending the uplink information to the base station in the first time unit.

An implementation of step 403' is similar to that of step 202, and details will not be repeated herein.

In the foregoing embodiment, the terminal may determine the first time unit used for uplink transmission according to the second indication information sent by the base station, and send the uplink information to the base station in the first time unit, thereby improving reliability of full-duplex communication.

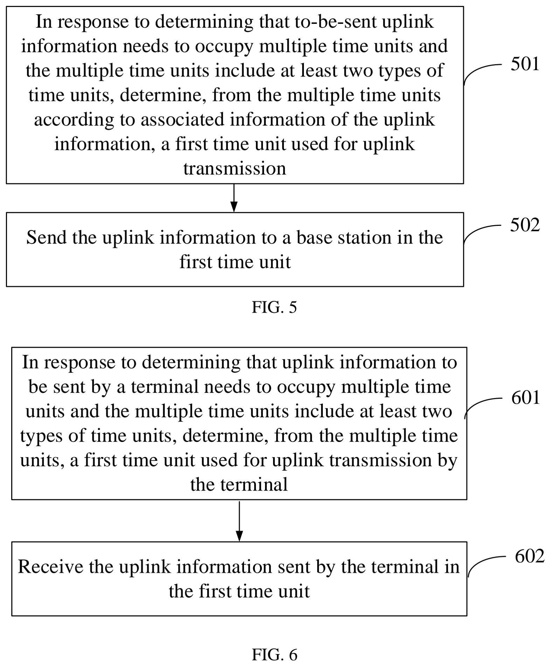

In some optional embodiments, as shown in FIG. 5, FIG. 5 is a flowchart of an information transmission method according to an embodiment, which may be performed by a terminal, and the method may include following steps 501 and 502.

In step 501, in response to determining that to-be-sent uplink information needs to occupy multiple time units and the multiple time units include at least two types of time units, determining, from the multiple time units according to associated information of the uplink information, a first time unit used for uplink transmission.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the second-type time unit may be defined as a non-SBFD time unit.

In a possible implementation, the associated information includes a number of time units that need to be occupied for repeated transmission of the uplink information.

In an example, if the number of time units that need to be occupied for repeated transmission of the uplink information is less than a preset number, the terminal may determine only the second-type time unit as the first time unit.

In another example, if the number of time units that need to be occupied for repeated transmission of the uplink information is greater than or equal to a preset number, determining only the second-type time unit as the first time unit may cause that the terminal cannot complete a specified times of uplink information transmissions, and therefore, in this embodiment, the terminal may determine the first-type time unit and the second-type time unit as the first time unit.

In another example, if the number of time units that need to be occupied for repeated transmission of the uplink information is greater than or equal to a preset number, the terminal may determine the first-type time unit and the second-type time unit as available time units, and further determine the first time unit from the available time units.

For example, if and only if the frequency-domain resource configured by the base station for the terminal to transmit the uplink information is within the frequency-domain resource range occupied by the uplink sub-band, the terminal may determine the first-type time unit as the first time unit from the available time units.

For example, if any frequency-domain resource occupied by the uplink information configured by the base station for the terminal is outside the frequency-domain resource range occupied by the uplink sub-band, the terminal may determine the second-type time unit as the first time unit from the available time units.

In another example, if a number of time units of any one of the first-type time units or the second-type time units is greater than or equal to a number of time units that need to be occupied for repeated transmission of the uplink information, the terminal may directly use this type of time units as the first time unit.

For example, if the terminal determines that a number of time units that need to be occupied for repeated transmission of the uplink information is 5, and in two time division duplexing (TDD) periods, a number of first-type time units is 4, and a number of second-type time units is 6, the terminal directly determines the second-type time unit as the first time unit.

For another example, if the terminal determines that the number of time units that need to be occupied for repeated transmission of the uplink information is 5, and in two TDD periods, the number of first-type time units is 6, the number of second-type time units is 4, and the frequency-domain resource occupied by the uplink information configured by the base station is within the frequency-domain resource range occupied by the uplink sub-band, the terminal may directly determine the first-type time unit as the first time unit.

In another example, if a number of first-type time units and a number of second-type time units are both greater than or equal to a number of time units that need to be occupied for repeated transmission of the uplink information, the terminal may use the first-type time units and the second-type time units as available time units, and determine the first time unit from the available time units.

For example, if and only if the frequency-domain resource configured by the base station for the terminal to transmit the uplink information is within the frequency-domain resource range occupied by the uplink sub-band, the terminal may determine the first-type time unit as the first time unit from the available time units.

For example, if any frequency-domain resource occupied by the uplink information configured by the base station for the terminal is outside the frequency-domain resource range occupied by the uplink sub-band, the terminal may determine the second-type time unit as the first time unit from the available time units.

For example, if the terminal determines that the number of time units that need to be occupied for repeated transmission of the uplink information is 5, and in two TDD periods, the number of first-type time units is 6, the number of second-type time units is 5, the terminal determines both the first-type time units and the second-type time units as the available time units, and further, the terminal determines that the frequency-domain resource occupied by the uplink information configured by the base station is within the frequency-domain resource range occupied by the uplink sub-band, the terminal may directly determine the first-type time unit as the first time unit.

For another example, if the terminal determines that the number of time units that need to be occupied for repeated transmission of the uplink information is 5, and in two TDD periods, the number of first-type time units is 6, the number of second-type time units is 5, the terminal determines both the first-type time units and the second-type time units as the available time units, and further, the terminal determines that any frequency-domain resource occupied by the uplink information configured by the base station is outside the frequency-domain resource range occupied by the uplink sub-band, the terminal may determine the second-type time unit as the first time unit.

In another example, if a number of first-type time units and a number of second-type time units are both greater than or equal to a number of time units that need to be occupied for repeated transmission of the uplink information, the terminal may use both the first-type time units and the second-type time units as the first time unit.

In another example, if a number the first-type time units and a number of the second-type time units are both less than a number of time units that need to be occupied for repeated transmission of the uplink information, the terminal may use the first-type time unit and the second-type time unit as the first time unit.

The above is only an example description, and the solution that the terminal determines the first time unit for uplink transmission from the multiple time units based on the number of time units that need to be occupied for repeated transmission of the uplink information shall fall within the protection scope of the present disclosure.

In another possible implementation, the associated information may include transmission type information of the uplink information.

In an example, the transmission type information may include but is not limited to transmission priority information, service type information corresponding to the uplink information, indication type information indicated when the base station configures or schedules the uplink information, etc.

The priority information may indicate a transmission priority corresponding to the uplink information.

The service type may include but is not limited to voice, video, paging, a short message, etc., or the service type may include but is not limited to an enhanced mobile broadband (eMBB) service, an ultra-reliable low-latency communications (uRLLC) service, a narrow band Internet of Things (NB-IoT) service, etc.

Assuming that the base station is configured with Type1 CG PUSCH, the indication type may be Type1 CG.

Correspondingly, the terminal may determine, based on a correspondence between transmission type information and a time unit type, the time unit type corresponding to the transmission type information, and then determine, from the multiple time units, a time unit belonging to the time unit type as the first time unit.

For example, the above correspondence may be agreed in a protocol or may be indicated by the base station, which is not limited in the present disclosure.

For example, when the correspondence includes that the uplink information with an indication type of Type1 CG corresponds to a time unit type including SBFD, the terminal determines the time unit belonging to SBFD from the multiple time units as the first time unit.

Alternatively, the terminal may determine, based on the correspondence, the time unit type corresponding to the transmission type information, and further, after determining, from the multiple time units, a time unit belonging to the time unit type as an available time unit, determine the first time unit from the available time unit.

In an example, in a case that the terminal determines both the first-type time unit and the second-type time unit as available time units, the terminal may determine the first time unit based on whether the frequency-domain resource occupied by the uplink information is within the frequency-domain resource range occupied by the uplink sub-band.

For example, if and only if the frequency-domain resource configured by the base station for the terminal to transmit the uplink information is within the frequency-domain resource range occupied by the uplink sub-band, the terminal may determine the first-type time unit as the first time unit from the available time units.

For example, if any frequency-domain resource occupied by the uplink information configured by the base station for the terminal is outside the frequency-domain resource range occupied by the uplink sub-band, the terminal may determine the second-type time unit as the first time unit from the available time units.

The above is only example description, and the associated information of the uplink information may also be other information, which is not limited in the present disclosure. In addition, all solutions in which the terminal determines the first time unit based on the associated information or determines the available time unit before determining the first time unit shall fall within the protection scope of the present disclosure.

In step 502, sending the uplink information to a base station in the first time unit.

An implementation of step 502 is similar to that of step 202, and details will not be repeated herein.

In the foregoing embodiment, the terminal may determine, based on the associated information of the uplink information, the first time unit used for uplink transmission, and send the uplink information to the base station in the first time unit, thereby improving reliability of full-duplex communication.

The following then describes the information transmission method provided in the present disclosure from a base station side. Similarly, the uplink information received by the base station includes but is not limited to an uplink channel and/or an uplink signal, where the uplink channel includes but is not limited to at least one of: a PUSCH or a PUCCH, and the uplink signal includes but is not limited to an SRS.

Accordingly, the information transmission solution provided by the present disclosure is applicable to a terminal performing at least one of following uplink transmissions: Type A repetition in Rel-16; Type A repetition in Rel-17; Type B repetition; TBoMS; multiple PUSCHs scheduled by one DCI; PUCCH with repetition enabled; Type1 CG PUSCH; Type2 CG PUSCH; periodically-transmitted PUCCH; and periodically-transmitted SRS.

An embodiment of the present disclosure provides an information transmission method, as shown in FIG. 6, FIG. 6 is a flowchart of an information transmission method according to an embodiment, which may be performed by a base station, and the method may include following steps 601 and 602.

In step 601, in response to determining that uplink information to be sent by a terminal needs to occupy multiple time units and the multiple time units include at least two types of time units, determining, from the multiple time units, a first time unit used for uplink transmission by the terminal.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the SBFD time unit may be in units of OFDM symbol, span, slot, etc., which is not limited in the present disclosure. One span includes multiple consecutive symbols.

For example, the second-type time unit may be defined as a non-SBFD time unit. The non-SBFD time unit may take a unit of OFDM symbol, span, slot, etc., which is not limited in the present disclosure.

Concepts of the SBFD time unit and the non-SBFD time unit have been described on the terminal side, and details will not be repeated herein.

The base station may determine, in the at least two types of time units, the first time unit in which the terminal performs the uplink transmission. Optionally, the first time unit may include a second-type time unit, or include both a first-type time unit and a second-type time unit. Alternatively, the terminal may first determine the first-type time unit and the second-type time unit as available time units, and then determine one type of the available time units as the first time unit. A specific determining manner is described in following embodiments, which will not be described herein.

In step 602, receiving the uplink information sent by the terminal in the first time unit.

In an embodiment of the present disclosure, after determining the first time unit, the base station may receive the uplink information sent by the terminal in the first time unit.

In a possible implementation, the first time unit includes a first-type time unit, that is, includes a SBFD time unit, and because an uplink sub-band is configured in the SBFD time unit, the base station may receive the uplink information in a frequency-domain resource included in the uplink sub-band in the first time unit.

In another possible implementation, the first time unit includes a second-type time unit, that is, includes a non-SBFD time unit, and although no uplink sub-band is configured in the non-SBFD time unit, the non-SBFD time unit is a time unit that can use the frequency-domain resource included in the uplink BWP, and the base station may receive the uplink information, sent by the terminal, in the frequency-domain resource range included in the uplink BWP in the second-type time unit.

In another possible implementation, the first time unit includes a first-type time unit and a second-type time unit, and the base station may receive, within a frequency-domain resource range included in an uplink sub-band in the first-type time unit, the uplink information sent by the terminal, and receive, within a frequency-domain resource range included in an uplink BWP in the second-type time unit, the uplink information sent by the terminal.

In the foregoing embodiment, the base station may determine the first time unit used by the terminal to perform uplink transmission, and receive, in the first time unit, the uplink information sent by the terminal, thereby improving reliability of full-duplex communication.

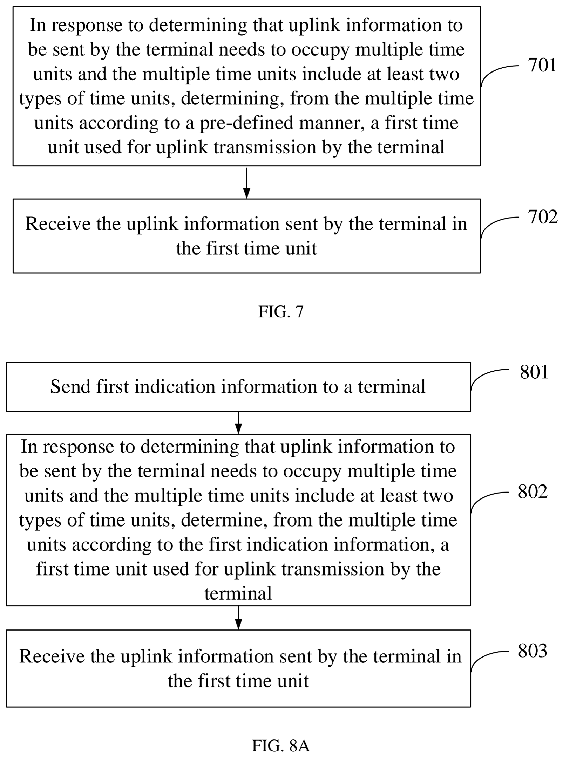

In some optional embodiments, as shown in FIG. 7, FIG. 7 is a flowchart of an information transmission method according to an embodiment, which may be performed by a base station, and the method may include following steps 701 and 702.

In step 701, in response to determining that uplink information to be sent by the terminal needs to occupy multiple time units and the multiple time units include at least two types of time units, determining, from the multiple time units according to a pre-defined manner, a first time unit used for uplink transmission by the terminal.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

In an embodiment of the present disclosure, the pre-defined manner may include, but is not limited to, a manner specified in a protocol.

For example, the protocol may directly specify an available time unit and/or an unavailable time unit, for example, specify at least one of: the SBFD time unit is an unavailable time unit; the SFBD time unit is an available time unit; and the non-SBFD time unit is an available time unit.

The available time unit means that the terminal can use this type of time unit for uplink transmission, and the unavailable time unit means that the terminal cannot use this type of time unit for uplink transmission.

Correspondingly, assuming that the protocol specifies that the SBFD time unit is an unavailable time unit, that is, the protocol specifies that the first-type time unit is an unavailable time unit, the base station may determine the second-type time unit as the first time unit from the multiple time units.

Assuming that the protocol specifies that the SBFD time unit is an available time unit, that is, the protocol specifies that the first-type time unit is an available time unit, the base station may determine the first-type time unit and the second-type time unit as the first time unit from the multiple time units.

Assuming that the protocol specifies that the non-SBFD time unit is an available time unit, that is, the protocol specifies that the second-type time unit is the available time unit, the base station may determine the second-type time unit as the first time unit from the multiple time units.

Assuming that the protocol specifies that the SBFD time unit and the non-SFBD time unit are available time units, the base station may determine the first-type time unit and the second-type time unit as the first time unit from the multiple time units.

Assuming that the protocol specifies that the SFBD time unit is an available time unit, that is, the protocol specifies that the first-type time unit is an available time unit, the base station may determine the first-type time unit as the available time unit from the multiple time units, and then determine the available time unit as the first time unit.

Assuming that the protocol specifies that the SFBD time unit is an available time unit, that is, the protocol specifies that the first-type time unit is an available time unit, the base station may determine the first-type time unit and the second-type time unit as available time units from the multiple time units, and then determine the first time unit from the available time units.

Assuming that the protocol specifies that the non-SFBD time unit is an available time unit, that is, the protocol specifies that the second-type time unit is an available time unit, the base station may determine the second-type time unit as the available time unit from the multiple time units, and then determine the available time unit as the first time unit.

Assuming that the protocol specifies that the SBFD time unit and the non-SBFD time unit are available time units, the terminal may determine the first-type time unit and the second-type time unit as available time units from the multiple time units, and then determine the first time unit from the available time units.

The above is only example description, and the base station directly determines the first time unit or determines the available time unit in a pre-defined manner should fall within the protection scope of the present disclosure.

In an example, in a case that the base station determines both the first-type time unit and the second-type time unit as available time units, the base station may determine the first time unit based on whether the frequency-domain resource occupied by the uplink information is within the frequency-domain resource range occupied by the uplink sub-band.

For example, if and only if the frequency-domain resource configured by the base station for the terminal to transmit the uplink information is within the frequency-domain resource range occupied by the uplink sub-band, the base station may determine the first-type time unit as the first time unit from the available time units.

For example, if any frequency-domain resource occupied by the uplink information configured by the base station for the terminal is outside the frequency-domain resource range occupied by the uplink sub-band, the base station may determine the second-type time unit as the first time unit from the available time units.

In step 702, receiving the uplink information sent by the terminal in the first time unit.

An implementation of step 702 is similar to that of step 602, and details will not be repeated herein.

In the foregoing embodiment, the base station may determine the first time unit used by the terminal to perform uplink transmission according to a pre-defined manner, and receive, in the first time unit, the uplink information sent by the terminal, thereby improving reliability of full-duplex communication.

In some optional embodiments, as shown in FIG. 8A, FIG. 8A is a flowchart of an information transmission method according to an embodiment, which may be performed by a base station, and the method may include following steps 801-803.

In step 801, sending first indication information to a terminal.

In an embodiment of the present disclosure, the first indication information may indicate that the first time unit includes any one of: the second-type time unit; and the first-type time unit and the second-type time unit.

In a possible implementation, the base station may send the first indication information to the terminal by using at least one of following messages: an RRC message, DCI, and a MAC CE.

In a possible implementation, the first indication information may occupy one bit, for example, a bit value of the bit being 1 indicates that the first time unit includes only the non-SBFD time unit; or a bit value of the bit being 0 indicates that the first time unit includes the SBFD time unit and the non-SBFD time unit.

Alternatively, the first indication information may occupy one bit, for example, a bit value of the bit being 1 indicates that the first time unit includes the SBFD time unit and the non-SBFD time unit; or a bit value of the bit being 0 indicates that the first time unit type includes only the non-SBFD time unit.

In step 802, in response to determining that uplink information to be sent by the terminal needs to occupy multiple time units and the multiple time units include at least two types of time units, determining, from the multiple time units according to the first indication information, a first time unit used for uplink transmission by the terminal.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the second-type time unit may be defined as a non-SBFD time unit.

In a possible implementation, if the first indication information indicates that the first time unit includes the second-type time unit, the base station determines the second-type time unit in the multiple time units as the first time unit.

In another possible implementation, if the first indication information indicates that the first time unit includes the first-type time unit and the second-type time unit, the base station determines the first-type time unit and the second-type time unit in the multiple time units as the first time unit.

The foregoing description is merely an example, and solutions in which the base station sends the first indication information to determine the first time unit shall fall within the protection scope of the present disclosure.

In step 803, receiving the uplink information sent by the terminal in the first time unit.

An implementation of step 803 is similar to that of step 602, and details will not be repeated herein.

In the foregoing embodiment, the base station may send the first indication information to the terminal, where the first indication information may be used to indicate the first time unit, and receive, in the first time unit, the uplink information sent by the terminal, thereby improving reliability of full-duplex communication.

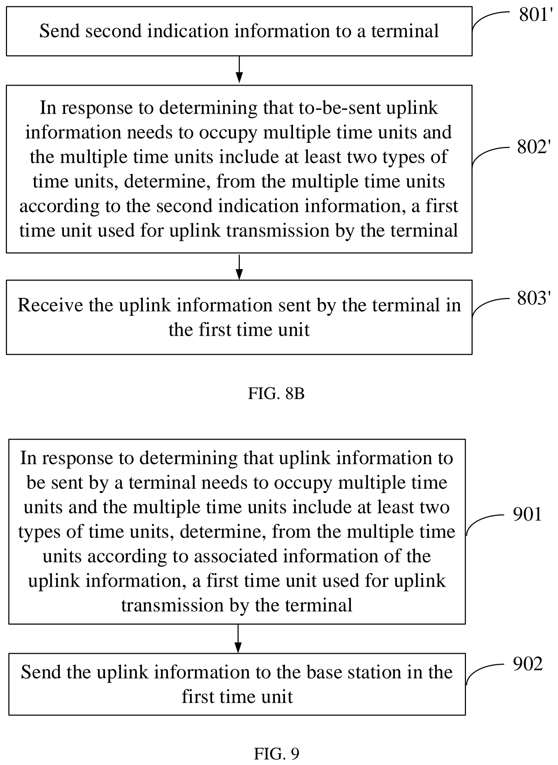

In some optional embodiments, as shown in FIG. 8B, FIG. 8B is a flowchart of an information transmission method according to an embodiment, which may be performed by a base station, and the method may include following steps 801'-803'.

In step 801', sending second indication information to a terminal.

In an embodiment of the present disclosure, the second indication information indicates that an available time unit includes any one of: the second-type time unit; and the first-type time unit and the second-type time unit.

In an example, the terminal may receive the second indication information sent by the base station by using at least one of following messages: an RRC message, DCI, and a MAC CE.

In an example, the second indication information may occupy one bit, for example, a bit value of the bit being 1 indicates that the available time unit includes only the non-SBFD time unit; or a bit value of the bit being 0 indicates that the available time unit type includes the SBFD time unit and the non-SBFD time unit.

Alternatively, the second indication information may occupy one bit, for example, a bit value of the bit being 1 indicates that the available time unit includes the SBFD time unit and the non-SBFD time unit; or a bit value of the bit being 0 indicates that the available time unit type includes only the non-SBFD time unit.

In step 802', in response to determining that to-be-sent uplink information needs to occupy multiple time units and the multiple time units include at least two types of time units, determining, from the multiple time units according to the second indication information, a first time unit used for uplink transmission by the terminal.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the second-type time unit may be defined as a non-SBFD time unit.

In a possible implementation, the base station may determine an available time unit indicated by the second indication information as the first time unit.

In an example, if the second indication information indicates that the available time unit includes the second-type time unit, the base station determines the second-type time unit in the multiple time units as the first time unit.

In an example, if the second indication information indicates that the available time unit includes the first-type time unit and the second-type time unit, the base station determines the first-type time unit and the second-type time unit in the multiple time units as the first time unit.

In another possible implementation, if the second indication information indicates that the available time unit includes the first-type time unit and the second-type time unit, the base station may determine the first time unit from the available time unit.

For example, if and only if the frequency-domain resource configured by the base station for the terminal to transmit the uplink information is within the frequency-domain resource range occupied by the uplink sub-band, the base station may determine the first-type time unit as the first time unit from the available time units.

For example, if any frequency-domain resource occupied by the uplink information configured by the base station for the terminal is outside the frequency-domain resource range occupied by the uplink sub-band, the base station may determine the second-type time unit as the first time unit from the available time units.

The foregoing descriptions are merely examples, and solutions in which the base station determines the first time unit based on the second indication information all fall within the protection scope of the present disclosure.

In step 803', receiving the uplink information sent by the terminal in the first time unit.

An implementation of step 803' is similar to that of step 602, and details will not be repeated herein.

In the foregoing embodiment, the base station may send the second indication information to the terminal, where the second indication information may indicate the available time unit, and after determining the first time unit based on the second indication information, the base station receives, in the first time unit, the uplink information sent by the terminal, thereby improving reliability of full-duplex communication.

In some optional embodiments, as shown in FIG. 9, FIG. 9 is a flowchart of an information transmission method according to an embodiment, which may be performed by a base station, and the method may include following steps 901 and 902.

In step 901, in response to determining that uplink information to be sent by a terminal needs to occupy multiple time units and the multiple time units include at least two types of time units, determining, from the multiple time units according to associated information of the uplink information, a first time unit used for uplink transmission by the terminal.

In an embodiment of the present disclosure, the at least two types of time units include a first-type time unit and a second-type time unit.

Specifically, the first-type time unit may be a time unit configured with an uplink sub-band, and a transmission direction thereof is downlink or flexible. The second-type time unit may be a time unit configured with no uplink sub-band, and a transmission direction thereof is uplink or flexible.

For example, the first-type time unit may be defined as a SBFD time unit, and the second-type time unit may be defined as a non-SBFD time unit.

In a possible implementation, the associated information includes a number of time units that need to be occupied for repeated transmission of the uplink information.

In an example, if the number of time units that need to be occupied for repeated transmission of the uplink information by the terminal is less than a preset number, the base station may determine only the second-type time unit as the first time unit.

In another example, if the number of time units that need to be occupied for repeated transmission of the uplink information by the terminal is greater than or equal to a preset number, the base station may determine the first-type time unit and the second-type time unit as the first time unit.

In another example, if the number of time units is greater than or equal to a preset number, the base station may determine the first-type time unit and the second-type time unit as available time units, and further determine the first time unit from the available time units.

For example, if and only if the frequency-domain resource configured by the base station for the terminal to transmit the uplink information is within the frequency-domain resource range occupied by the uplink sub-band, the base station may determine the first-type time unit as the first time unit from the available time units.

For example, if any frequency-domain resource occupied by the uplink information configured by the base station for the terminal is outside the frequency-domain resource range occupied by the uplink sub-band, the base station may determine the second-type time unit as the first time unit from the available time units.

In another example, if a number of time units of any one of the first-type time units or the second-type time units is greater than or equal to a number of time units that need to be occupied for repeated transmission of the uplink information, the base station may directly use this type of time units as the first time unit.

In another example, if a number of first-type time units and a number of second-type time units are both greater than or equal to a number of time units that need to be occupied for repeated transmission of the uplink information, the base station may use the first-type time units and the second-type time units as available time units, and determine the first time unit from the available time units.

For example, if and only if the frequency-domain resource configured by the base station for the terminal to transmit the uplink information is within the frequency-domain resource range occupied by the uplink sub-band, the terminal may determine the first-type time unit as the first time unit from the available time units.

For example, if any frequency-domain resource occupied by the uplink information configured by the base station for the terminal is outside the frequency-domain resource range occupied by the uplink sub-band, the terminal may determine the second-type time unit as the first time unit from the available time units.

In another example, if a number of first-type time units and a number of second-type time units are both greater than or equal to a number of time units that need to be occupied for repeated transmission of the uplink information, the base station may use both the first-type time units and the second-type time units as the first time unit.

In another example, if a number the first-type time units and a number of the second-type time units are both less than a number of time units that need to be occupied for repeated transmission of the uplink information, the base station may use the first-type time unit and the second-type time unit as the first time unit.

In another possible implementation, the associated information may include transmission type information of the uplink information.

In an example, the transmission type information may include but is not limited to transmission priority information, service type information corresponding to the uplink information, indication type information indicated when the base station configures or schedules the uplink information, etc.

The priority information may indicate a transmission priority corresponding to the uplink information.

The service type may include but is not limited to a voice, a video, paging, a short message, etc., or the service type may include but is not limited to an eMBB service, a uRLLC service, a NB-IoT service, etc.

Assuming that the base station is configured with Type1 CG PUSCH, the indication type may be Type1 CG.

Correspondingly, the base station may determine, based on a correspondence between transmission type information and a time unit type, the time unit type corresponding to the transmission type information, and then determine, from the multiple time units, a time unit belonging to the time unit type as the first time unit.

For example, the above correspondence may be agreed in a protocol or may be indicated by the base station, which is not limited in the present disclosure.

For example, when the correspondence includes that the uplink information with an indication type of Type1 CG corresponds to a time unit type including SBFD, the base station determines the time unit belonging to SBFD from the multiple time units as the first time unit.

Alternatively, the base station may determine, based on the correspondence, the time unit type corresponding to the transmission type information, and further, after determining, from the multiple time units, a time unit belonging to the time unit type as an available time unit, determine the first time unit from the available time unit.

In an example, in a case that the base station determines both the first-type time unit and the second-type time unit as available time units, the base station may determine the first time unit based on whether the frequency-domain resource occupied by the uplink information is within the frequency-domain resource range occupied by the uplink sub-band.

For example, if and only if the frequency-domain resource configured by the base station for the terminal to transmit the uplink information is within the frequency-domain resource range occupied by the uplink sub-band, the base station may determine the first-type time unit as the first time unit from the available time units.

For example, if any frequency-domain resource occupied by the uplink information configured by the base station for the terminal is outside the frequency-domain resource range occupied by the uplink sub-band, the base station may determine the second-type time unit as the first time unit from the available time units.

The above is only example description, and the associated information of the uplink information may also be other information, which is not limited in the present disclosure. In addition, all solutions in which the base station determines the first time unit based on the associated information or determines the available time unit before determining the first time unit shall fall within the protection scope of the present disclosure.

In step 902, sending the uplink information to the base station in the first time unit.

An implementation of step 902 is similar to that of step 602, and details will not be repeated herein.

In the foregoing embodiment, the base station may determine the first time unit used by the terminal to perform uplink transmission according to associated information of the uplink information, and receive, in the first time unit, the uplink information sent by the terminal, thereby improving reliability of full-duplex communication.

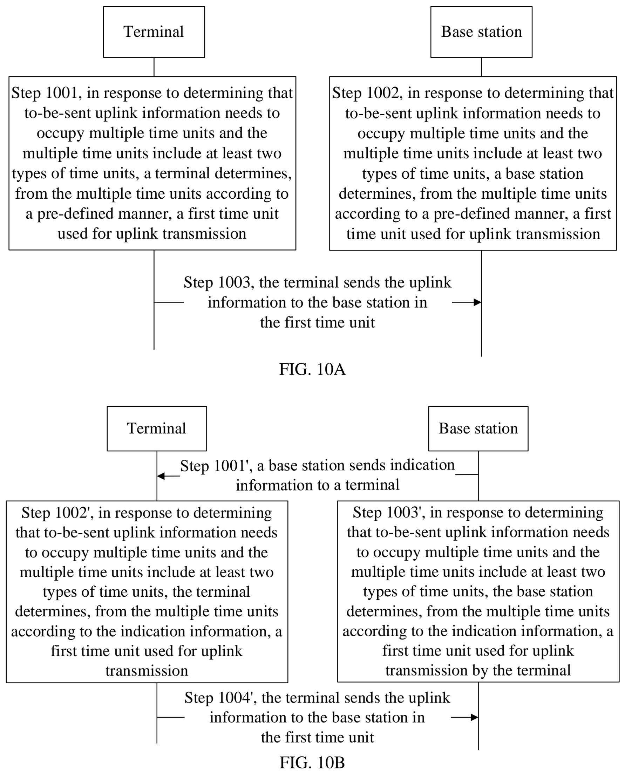

In some optional embodiments, referring to FIG. 10A, FIG. 10A is a flowchart of an information transmission method according to an embodiment, and the method may include following steps 1001-1003.

In step 1001, in response to determining that to-be-sent uplink information needs to occupy multiple time units and the multiple time units include at least two types of time units, a terminal determines, from the multiple time units according to a pre-defined manner, a first time unit used for uplink transmission.

An implementation of step 1001 is similar to that of step 301, and details will not be repeated herein.

In step 1002, in response to determining that to-be-sent uplink information needs to occupy multiple time units and the multiple time units include at least two types of time units, a base station determines, from the multiple time units according to a pre-defined manner, a first time unit used for uplink transmission.

An implementation of step 1002 is similar to that of step 701, and details will not be repeated herein.

In step 1003, the terminal sends the uplink information to the base station in the first time unit.

The base station may receive the uplink information in the first time unit.

An implementation of step 1003 is similar to that of step 202, and details will not be repeated herein. In the foregoing embodiment, both the terminal and the base station may determine, in a pre-defined manner, the first time unit in which the terminal performs uplink transmission, the terminal sends the uplink information in the first time unit, and the base station receives the uplink information in the first time unit, so as to ensure that the terminal and the base station have a consistent understanding of a time-domain resource for uplink transmission, thereby improving reliability of full-duplex communication.

In some optional embodiments, referring to FIG. 10B, FIG. 10B is a flowchart of another information transmission method according to an embodiment, and the method may include following steps 1001'-1004'.

In step 1001', a base station sends indication information to a terminal.

The indication information may be the first indication information, and an implementation of step 1001' is similar to that of step 801, and details will not be repeated herein.

The indication information may be the second indication information, and an implementation of step 1001' is similar to that of step 801', and details will not be repeated herein.

In step 1002', in response to determining that to-be-sent uplink information needs to occupy multiple time units and the multiple time units include at least two types of time units, the terminal determines, from the multiple time units according to the indication information, a first time unit used for uplink transmission.

The indication information may be the first indication information, and an implementation of step 1002' is similar to that of step 402, and details will not be repeated herein.

The indication information may be the second indication information, and an implementation of step 1002' is similar to that of step 402', and details will not be repeated herein.

In step 1003', in response to determining that to-be-sent uplink information needs to occupy multiple time units and the multiple time units include at least two types of time units, the base station determines, from the multiple time units according to the indication information, a first time unit used for uplink transmission by the terminal.

The indication information may be the first indication information, and an implementation of step 1003' is similar to that of step 802, and details will not be repeated herein.

The indication information may be the second indication information, and an implementation of step 1003' is similar to that of step 802', and details will not be repeated herein.

In step 1004', the terminal sends the uplink information to the base station in the first time unit.

The base station may receive the uplink information in the first time unit.

An implementation of step 1004' is similar to that of step 202, and details will not be repeated herein.

In the foregoing embodiment, both the terminal and the base station may determine, based on the indication information sent by the base station, the first time unit in which the terminal performs uplink transmission, the terminal sends the uplink information in the first time unit, and the base station receives the uplink information in the first time unit, so as to ensure that the terminal and the base station have a consistent understanding of a time-domain resource for uplink transmission, thereby improving reliability of full-duplex communication.

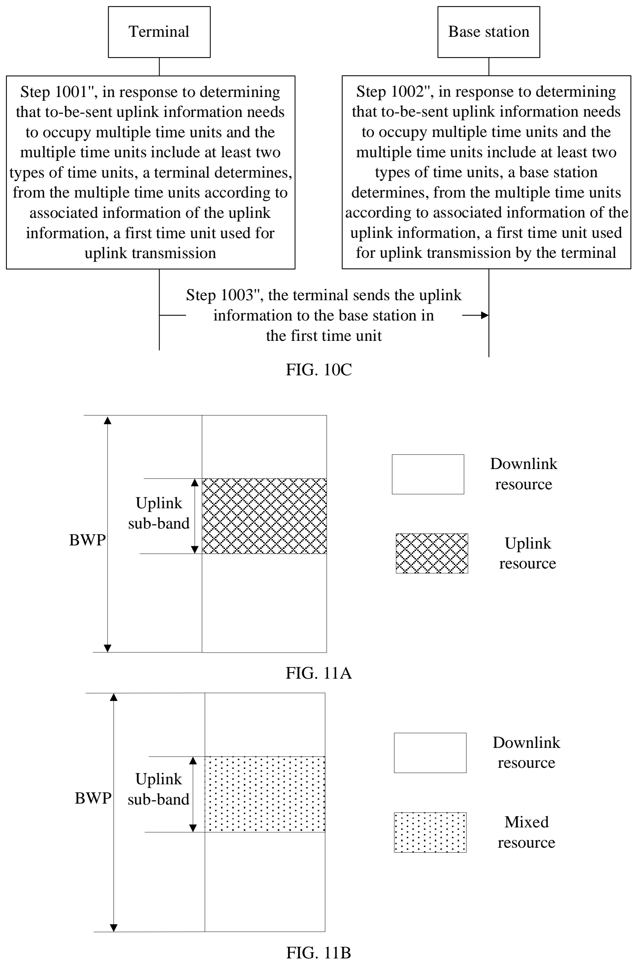

In some optional embodiments, referring to FIG. 10C, FIG. 10C is a flowchart of another information transmission method according to an embodiment, and the method may include following steps 1001"-1003".

In step 1001", in response to determining that to-be-sent uplink information needs to occupy multiple time units and the multiple time units include at least two types of time units, a terminal determines, from the multiple time units according to associated information of the uplink information, a first time unit used for uplink transmission.

An implementation of step 1001" is similar to that of step 501, and details will not be repeated herein. In step 1002", in response to determining that to-be-sent uplink information needs to occupy multiple time units and the multiple time units include at least two types of time units, a base station determines, from the multiple time units according to associated information of the uplink information, a first time unit used for uplink transmission by the terminal.

An implementation of step 1002" is similar to that of step 901, and details will not be repeated herein. In step 1003", the terminal sends the uplink information to the base station in the first time unit.

The base station may receive the uplink information in the first time unit.

An implementation of step 1003" is similar to that of step 202, and details will not be repeated herein. In the foregoing embodiment, both the terminal and the base station may determine, based on the associated information of the uplink information, the first time unit in which the terminal performs uplink transmission, the terminal sends the uplink information in the first time unit, and the base station receives the uplink information in the first time unit, to ensure that the terminal and the base station have a consistent understanding of the time domain resource for uplink transmission, thereby improving reliability of full-duplex communication.

In order to facilitate the understanding of the solutions of the present disclosure, the above solutions are further illustrated as follows.

Embodiment 1: It is assumed that the terminal is a terminal of a Rel-18 or a subsequent release, and has a half-duplex capability or a full-duplex capability, which is not limited in the present disclosure. It is assumed that the base station side performs a full-duplex operation in a downlink slot of the TDD frequency band, that is, schedules downlink data and uplink data simultaneously. When the base station side performs the full-duplex operation, one of the following manners is used, which is not limited in the present disclosure:

frequency-domain resources for DL transmission and UL transmission in a DL slot are independent of each other and do not overlap with each other, for example, as shown in FIG. 11A;

frequency-domain resources for DL transmission and UL transmission in a DL slot completely overlap, for example, as shown in FIG. 11B;

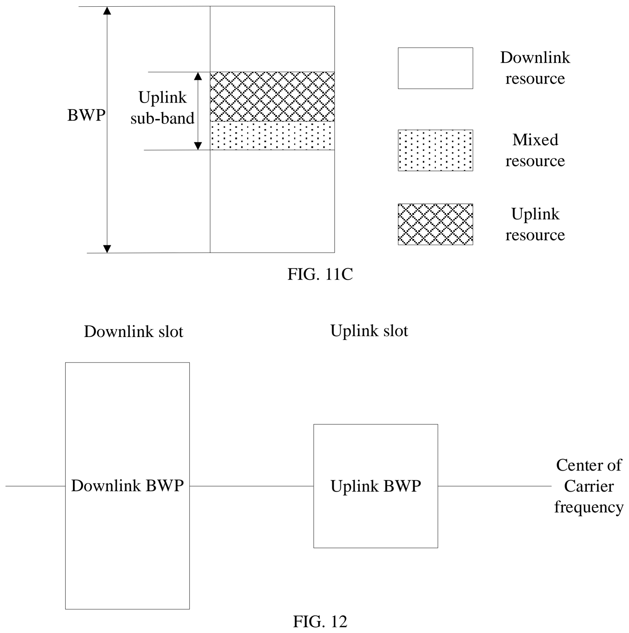

frequency-domain resources for DL transmission and UL transmission in a DL slot partially overlap, for example, as shown in FIG. 11C.

It is assumed that a time division duplex uplink-downlink configuration (TDD UL-DL configuration) of a current system is DDDDDDSUUU, where D corresponds to downlink, S corresponds to flexible, U corresponds to uplink, and a bandwidth of a DL BWP in a DL slot is different from a bandwidth of a UL BWP in a UL slot. For a TDD band, center frequencies of the DL BWP and the UL BWP need to be aligned, as shown in FIG. 12.

When the base station schedules or configures the terminal to send uplink information in multiple slots, and the multiple slots include a SBFD slot and a non-SBFD slot, at this time, the terminal may transmit the uplink information only in the non-SBFD slot, that is, the SBFD slot is considered as an unavailable slot. The SBFD slot is a DL slot configured with a UL sub-band or a flexible slot configured with a UL sub-band.

The uplink transmission includes but is not limited to at least one of:
a PUSCH with Rel-15 or Rel-16 Repetition type A enabled;
a PUSCH with Rel-17 repetition type A and configured with an available slot counting enabled;
a PUSCH with Rel-16 repetition type B enabled;
a PUSCH with TBoMS enabled;
multiple PUSCHs scheduled by one DCI;
a PUCCH with repetition enabled;
Type1-CG PUSCH;
Type2-CG PUSCH;
a PUCCH transmitted periodically.

In this embodiment, the PUSCH with repetition type A enabled is taken as an example, and a number of repetitions R=8. It is assumed that the base station configures UL sub-bands in slot #0, slot #1, and slot #2.

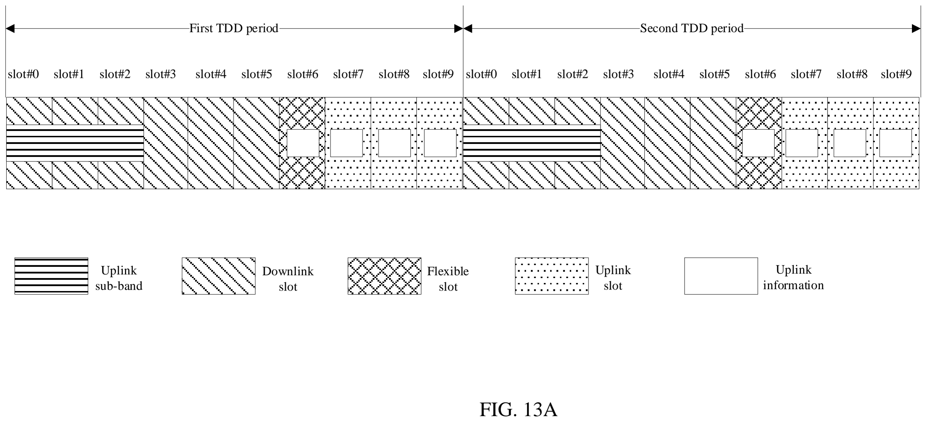

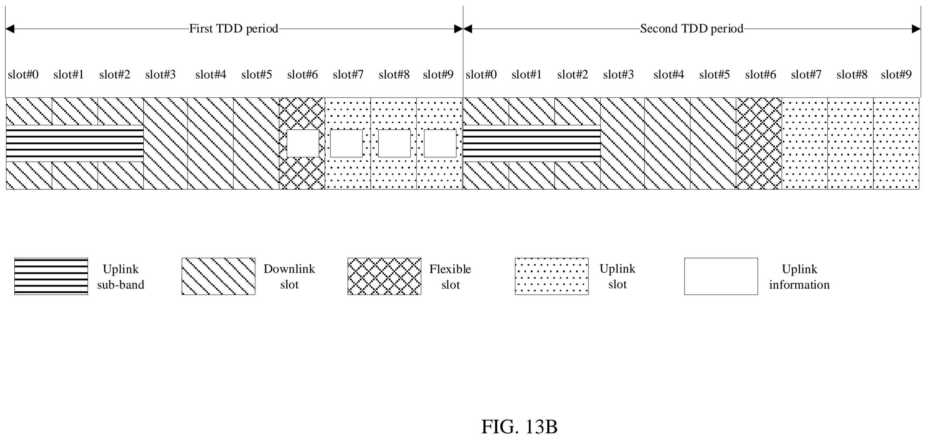

Referring to FIG. 13A or FIG. 13B, slot #0, slot #1 and slot #2 belong to the first-type time unit, and slot #6 to slot #9 belong to the second-type time unit.

In FIG. 13A, Rel-17 PUSCH repetition type A with available slot counting is enabled. In this case, because the terminal and the base station determine, in a pre-defined manner, that the first-type time unit (i.e., the SBFD slot) is an unavailable slot based on a protocol agreement, the terminal performs repetition counting only in the second-type time unit (i.e., the non-SBFD slot), and the terminal needs to complete eight PUSCH transmissions in slot #6 to slot #9 in the first TDD period and slot #6 to slot #9 in the second TDD period.

FIG. 13B corresponds to Rel-16 PUSCH repetition type A, and in this case, the terminal can perform PUSCH repetition transmission only in consecutive slots. Since the terminal and the base station consider that the SBFD slot is an unavailable slot, the terminal can only perform 4 PUSCH repetition transmissions on slot #6 to slot #9 of the first TDD period, and cannot complete 8 PUSCH repetition transmissions.

For other types of uplink transmission, the adopted method is similar to PUSCH repetition transmission, which will not be repeated here.

Embodiment 2: It is assumed that the terminal is a terminal of a Rel-18 or a subsequent release, and has a half-duplex capability or a full-duplex capability, which is not limited in the present disclosure. It is assumed that the base station side performs a full-duplex operation in a downlink slot of the time division duplexing (TDD) frequency band, that is, schedules downlink data and uplink data simultaneously. When the base station side performs the full-duplex operation, one of the following manners is used, which is not limited in the present disclosure:
frequency-domain resources for DL transmission and UL transmission in a DL slot are independent of each other and do not overlap with each other, for example, as shown in FIG. 11A;
frequency-domain resources for DL transmission and UL transmission in a DL slot completely overlap, for example, as shown in FIG. 11B;
frequency-domain resources for DL transmission and UL transmission in a DL slot partially overlap, for example, as shown in FIG. 11C.

It is assumed that a time division duplex uplink-downlink configuration (TDD UL-DL configuration) of a current system is DDDDDDSUUU, where D corresponds to downlink, S corresponds to flexible, U corresponds to uplink, and a bandwidth of a DL BWP in a DL slot is different from a bandwidth of a UL BWP in a UL slot. For a TDD band, center frequencies of the DL BWP and the UL BWP need to be aligned, as shown in FIG. 12.

When the base station schedules or configures the terminal to send uplink information in multiple slots, and the multiple slots include a SBFD slot and a non-SBFD slot, at this time, the terminal may transmit the uplink information only in the non-SBFD slot, that is, the SBFD slot is considered as an unavailable slot. The SBFD slot is a DL slot configured with a UL sub-band or a flexible slot configured with a UL sub-band.

The uplink transmission includes but is not limited to at least one of:
a PUSCH with Rel-15 or Rel-16 Repetition type A enabled;
a PUSCH with Rel-17 repetition type A and configured with an available slot counting enabled;
a PUSCH with Rel-16 repetition type B enabled;
a PUSCH with TBoMS enabled;
multiple PUSCHs scheduled by one DCI;
a PUCCH with repetition enabled;
Type1-CG PUSCH;
Type2-CG PUSCH;
a PUCCH transmitted periodically.

In this embodiment, the PUSCH with repetition type A enabled is taken as an example, and a number of repetitions R=8. It is assumed that the base station configures UL sub-bands in slot #0, slot #1, and slot #2.

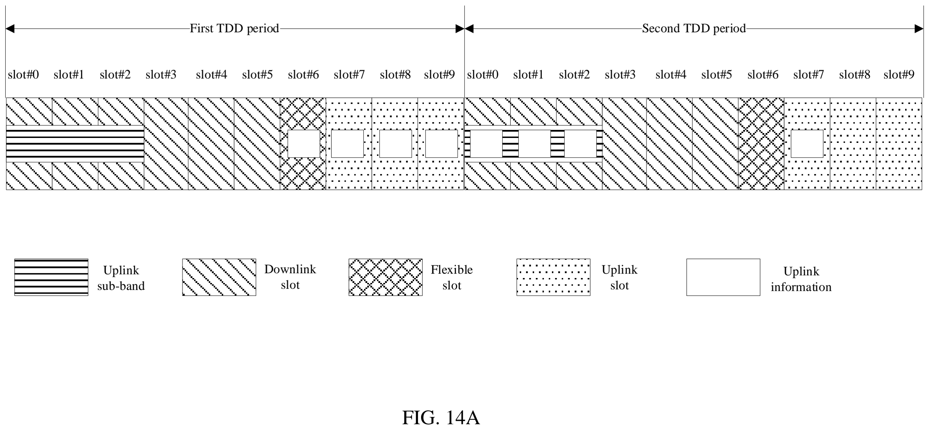

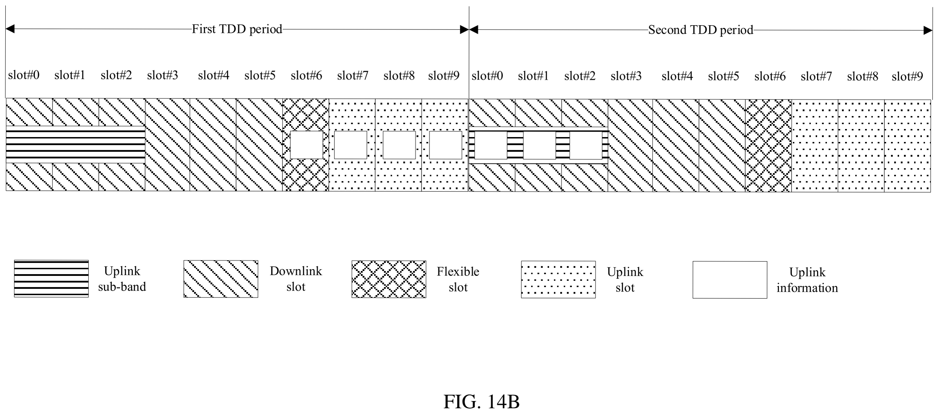

Referring to FIG. 14A or FIG. 14B, slot #0, slot #1 and slot #2 belong to the first-type time unit, and slot #6 to slot #9 belong to the second-type time unit.

In FIG. 14A, Rel-17 PUSCH repetition type A with available slot counting is enabled. In this case, because the terminal and the base station determine, in a pre-defined manner, that the first-type time unit (i.e., the SBFD slot) is an available slot based on a protocol agreement, the terminal may perform repetition counting in the non-SBFD slot and the SBFD slot, and the terminal needs to complete eight PUSCH transmissions in the slot #6 to the slot #9 in the first TDD period, and the slot #0 to the slot #2 and the slot #6 in the second TDD period.

FIG. 14B corresponds to Rel-16 PUSCH repetition type A, and in this case, the terminal can perform PUSCH repetition transmission only in consecutive slots. The terminal can perform only four PUSCH repetition transmissions in slot #6 to slot #9 of the first TDD period, and perform three PUSCH repetition transmissions in slot #0 to slot #2 of the second TDD period. Because the eighth repetition is located in the DL slot, and the DL slot is an unavailable resource, the terminal does not send the eighth repetition. In FIG. 14B, the terminal sends seven PUSCH repetition transmissions.

Embodiment 3: as described in Embodiment 2, the terminal and the base station may determine at least one of the first-type time unit and the second-type time unit as an available time unit, and then determine the first time unit for uplink transmission in the available time unit. After the terminal and the base station determine the first-type time unit and the second-type time unit as available time units, if and only if the frequency-domain resource occupied by the uplink transmission is completely within the frequency-domain resource range occupied by the uplink sub-band (UL sub-band), the terminal uses the first-type time unit (i.e., the SBFD slot) as the first time unit; otherwise, the terminal still uses the SBFD slot as an unavailable slot, that is, uses the non-SBFD slot as the first time unit.

It is assumed that the base station configures or indicates the repetition type A for the terminal, and the frequency-domain resource occupied by the uplink transmission allocated or indicated for the terminal is not completely within the frequency-domain resource range occupied by the UL sub-band. For example, a frequency-domain resource range occupied by the PUSCH is greater than a frequency-domain resource range occupied by the UL sub-band, or partially overlaps the UL sub-band. In this case, the SBFD slot is an unavailable slot.

It is assumed that the base station configures UL sub-bands in slot #0, slot #1, and slot #2.

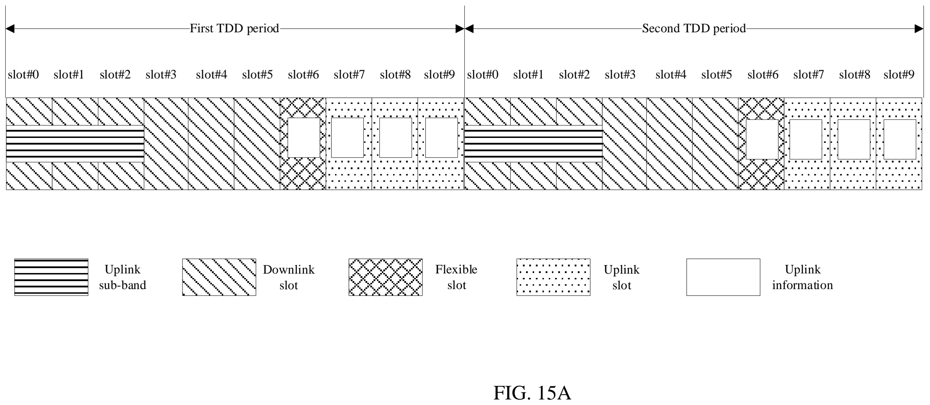

As shown in FIG. 15A, Rel-17 PUSCH repetition type A with available slot counting is enabled. In this case, a part of the frequency-domain resource occupied by the uplink transmission is located outside the frequency-domain resource range occupied by the uplink sub-band, and therefore the terminal and the base station consider that the second-type time unit (i.e., the non-SBFD slot) is the first time unit. The terminal needs to complete eight PUSCH transmissions in slot #6 to slot #9 of the first TDD period and slot #6 to slot #9 of the second TDD period.

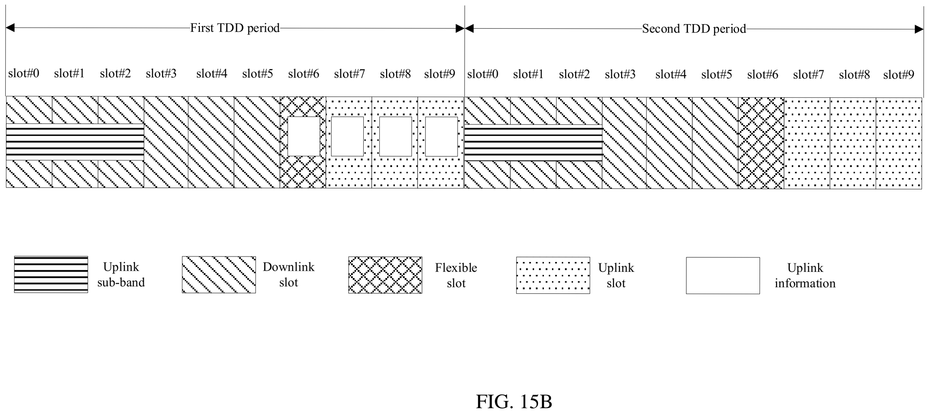

FIG. 15B corresponds to Rel-16 PUSCH repetition type A, and in this case, the terminal can perform PUSCH repetition transmission only in consecutive slots. Since time-domain resources of repetition #4 to repetition #7 occur on the DL slot, the terminal can only perform 4 PUSCH repetition transmissions on slot #6 to slot #9 of the first TDD period.

Embodiment 4: as described in Embodiment 1 to Embodiment 3, when the terminal needs to transmit uplink in multiple slots, the base station and the terminal may determine, in the following two manners, the first time unit used for uplink transmission.

Manner 1: the base station and the terminal consider that the uplink transmission can only be transmitted in a non-SBFD slot, that is, the uplink transmission can only be performed in a flexible slot or a UL slot configured with no uplink sub-band.

Manner 2: the base station and the terminal consider that the uplink transmission can be performed in a SBFD slot and a non-SBFD slot.

Further, if the frequency-domain resource occupied by the uplink transmission is not completely within the frequency-domain resource range occupied by the UL sub-band, the terminal and the base station consider the SBFD slot as an unavailable slot.

In this embodiment, the base station may indicate, by using explicit signaling, that the terminal should perform uplink transmission according to one of the foregoing manners. For example, 1-bit indication information is used to indicate whether the terminal can use the SBFD slot as an available slot when performing uplink transmission, as shown in Table 1, the indication information may be the first indication information.

**Table 1**

| Bit Value Indicated by the First Indication Information | Terminal Behavior |
|---|---|
| 0 | Uplink transmission can only be performed in a non-SBFD slot |
| 1 | Uplink transmission can be performed in a SBFD slot and a non-SBFD slot |

The indication information may be carried by following signaling, which is not limited in this embodiment:
an RRC message, DCI, or a MAC CE.

Embodiment 5: as described in Embodiment 1 to Embodiment 3, when the terminal needs to transmit uplink information in multiple slots, the base station and the terminal may determine, in a pre-defined manner, for example, based on associated information, the first time unit used for uplink transmission, where the associated information includes but is not limited to the following:
the associated information includes a number of time units that need to be occupied for repeated transmission of the uplink information;
transmission type information, for example, priority information, service type information, and indication type information.

A specific determining manner has been described in the foregoing embodiments, and details will not be described herein.

For other types of uplink transmission, the adopted method is similar to PUSCH repetition transmission, which will not be repeated here.

In the foregoing embodiment, it can be ensured that the terminal and the base station have consistent understanding on the time-domain resource for transmitting the uplink information, thereby improving reliability of full-duplex communication.

Corresponding to the above embodiments of application function implementation method, the present disclosure further provides embodiments of an application function implementation apparatus.

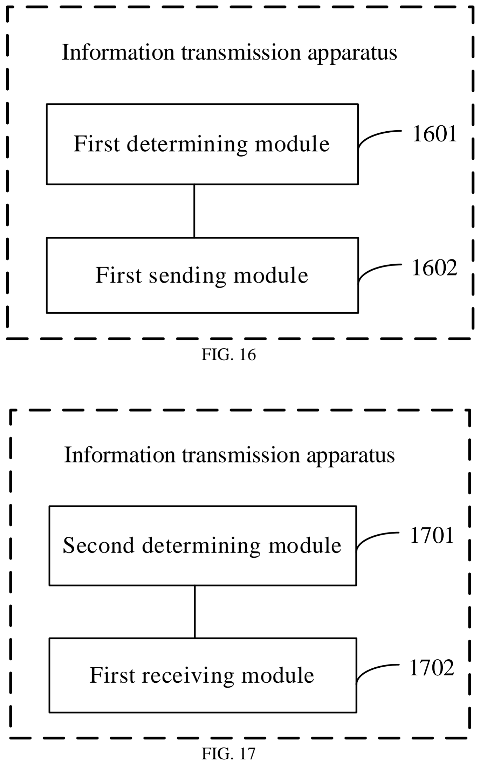

Referring to FIG. 16, FIG. 16 is a block diagram of an information transmission apparatus according to an example embodiment. The apparatus is applied to a terminal, and includes:
a first determining module 1601, configured to, in response to determining that to-be-sent uplink information needs to occupy multiple time units and the multiple time units include at least two types of time units, determine, from the multiple time units, a first time unit used for uplink transmission; and
a first sending module 1602, configured to send the uplink information to a base station in the first time unit.

Optionally, the at least two types of time units include:
a first-type time unit, configured with an uplink sub-band, and a transmission direction thereof is downlink or flexible; and
a second-type time unit, configured with no uplink sub-band, and a transmission direction thereof is uplink or flexible.

Optionally, the first determining module includes any one of:
a first determining sub-module, configured to determine the second-type time unit from the multiple time units as the first time unit; and
a second determining sub-module, configured to determine the first-type time unit and the second-type time unit from the multiple time units as the first time unit; and
a third determining sub-module, configured to determine the first-type time unit and the second-type time unit in the multiple time units as an available time unit, and determining the first time unit from the available time unit.

Optionally, the apparatus further includes:
a second receiving module, configured to receive first indication information sent by the base station, where the first indication information indicates that the first time unit includes any one of:
the second-type time unit; and
the first-type time unit and the second-type time unit.

Optionally, the apparatus further includes:
a third receiving module, configured to receive second indication information sent by the base station, where the second indication information indicates that an available time unit includes any one of:
the second-type time unit; and
the first-type time unit and the second-type time unit;
where the first determining module includes:
a fourth determining sub-module, configured to determine, from the multiple time units, the available time unit indicated by the second indication information as the first time unit.

Optionally, the first determining module includes:
a fifth determining sub-module, configured to determine, from the multiple time units, the first time unit based on associated information of the uplink information.

Optionally, the associated information includes a number of time units that need to be occupied for repeated transmission of the uplink information;
where the fifth determining sub-module is further configured to perform any one of:
in response to determining the number of time units being less than a preset number, determining the second-type time unit as the first time unit;
in response to determining the number of time units being greater than or equal to the preset number, determining the first-type time unit and the second-type time unit as the first time unit; and
in response to determining the number of time units being greater than or equal to the preset number, determining the first-type time unit and the second-type time unit as an available time unit, and then determining the first time unit from the available time unit.

Optionally, the associated information includes transmission type information of the uplink information;
where the fifth determining sub-module is further configured to:
determine, based on a correspondence between the transmission type information and types of time units, a type of time units corresponding to the transmission type information; and
determine, from the multiple time units, a time unit belonging to the type of time units as the first time unit.

Optionally, the third determining sub-module is further configured to perform any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

Optionally, the fifth determining sub-module is further configured to perform any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

Referring to FIG. 17, FIG. 17 is a block diagram of an information transmission apparatus according to an example embodiment. The apparatus is applied to a base station, and includes:
a second determining module 1701, configured to, in response to determining that uplink information to be sent by a terminal needs to occupy multiple time units and the multiple time units include at least two types of time units, determine, from the multiple time units, a first time unit used for uplink transmission by the terminal; and
a first receiving module 1702, configured to receive the uplink information sent by the terminal in the first time unit.

Optionally, the at least two types of time units include:
a first-type time unit, configured with an uplink sub-band, and a transmission direction thereof is downlink or flexible; and
a second-type time unit, configured with no uplink sub-band, and a transmission direction thereof is uplink or flexible.

Optionally, the second determining module includes any one of:
a sixth determining sub-module, configured to determine the second-type time unit from the multiple time units as the first time unit; and
a seventh determining sub-module, configured to determine the first-type time unit and the second-type time unit from the multiple time units as the first time unit; and
an eighth determining sub-module, configured to determine the first-type time unit and the second-type time unit in the multiple time units as an available time unit, and determining the first time unit from the available time unit.

Optionally, the apparatus further includes:
a second sending module, configured to send first indication information to the terminal, where the first indication information indicates that the first time unit includes any one of:
the second-type time unit; and
the first-type time unit and the second-type time unit.

Optionally, the apparatus further includes:
a third sending module, configured to send second indication information to the terminal, where the second indication information indicates that an available time unit includes any one of:
the second-type time unit; and
the first-type time unit and the second-type time unit;
where the second determining module includes:
a ninth determining sub-module, configured to determine, from the multiple time units, the available time unit indicated by the second indication information as the first time unit.

Optionally, the second determining module includes:
a tenth determining sub-module, configured to determine, from the multiple time units, the first time unit based on associated information of the uplink information.

Optionally, the associated information includes a number of time units that need to be occupied for repeated transmission of the uplink information;
where the tenth determining sub-module is further configured to perform any one of:
in response to determining the number of time units being less than a preset number, determining the second-type time unit as the first time unit;
in response to determining the number of time units being greater than or equal to the preset number, determining the first-type time unit and the second-type time unit as the first time unit; and
in response to determining the number of time units being greater than or equal to the preset number, determining the first-type time unit and the second-type time unit as an available time unit, and then determining the first time unit from the available time unit.

Optionally, the associated information includes transmission type information of the uplink information;
where the tenth determining sub-module is further configured to:
determine, based on a correspondence between the transmission type information and types of time units, a type of time units corresponding to the transmission type information; and
determine, from the multiple time units, a time unit belonging to the type of time units as the first time unit.

Optionally, the eighth determining sub-module is further configured to perform any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

Optionally, the tenth determining sub-module is further configured to perform any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

For the apparatus embodiments, as they basically correspond to the method embodiments, relevant parts can be referred from the description of the method embodiments. The apparatus embodiments described above are merely illustrative, where the units described as separate components may or may not be physically separated, and the components displayed as units may or may not be physical units, that is, may be located in one place, or may be distributed on a plurality of network units. Some or all of the modules may be selected according to actual needs to achieve the objectives of the solutions of the present disclosure. A person of ordinary skill in the art may understand and implement the embodiments of the present disclosure without making creative efforts.

Correspondingly, the present disclosure further provides a computer-readable storage medium storing a computer program, where the computer program is used for performing the information transmission method for the terminal side described above.

Correspondingly, the present disclosure further provides a computer-readable storage medium storing a computer program, where the computer program is used for performing the information transmission method for the base station side described above.

Correspondingly, the present disclosure further provides an information transmission device, including:
one or more processors;
a memory for storing a processor-executable instruction;
where the processor is configured to perform the information transmission method according to any one of the above terminal side.

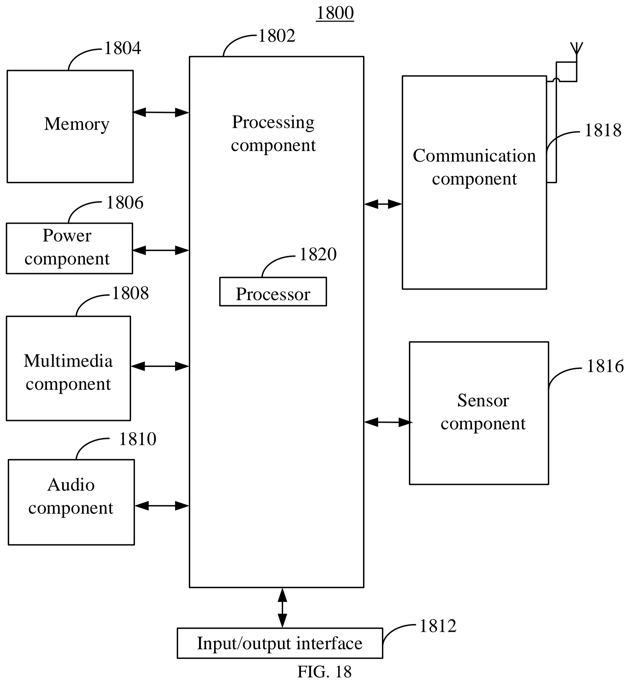

FIG. 18 is a block diagram of an electronic device 1800 according to an example embodiment. For example, the electronic device 1800 may be a terminal such as a mobile phone, a tablet computer, an e-book reader, a multimedia playback device, a wearable device, vehicle-mounted terminal, an iPad, or a smart television.

Referring to FIGS. 18, the electronic device 1800 may include one or more of the following components: a processing component 1802, a memory 1804, a power component 1806, a multimedia component 1808, an audio component 1810, an input/output (I/O) interface 1812, a sensor component 1816, and a communication component 1818.

The processing component 1802 typically controls overall operations of the electronic device 1800, such as the operations associated with display, telephone calls, data communications, camera operations, and recording operations. The processing component 1802 may include one or more processors 1820 to execute instructions to perform all or part of the steps in the above information transmission method. Moreover, the processing component 1802 may include one or more modules which facilitate the interaction between the processing component 1802 and other components. For example, the processing component 1802 may include a multimedia module to facilitate the interaction between the multimedia component 1808 and the processing component 1802. For another example, the processing component 1802 may read executable instructions from the memory to implement the steps of the information transmission method provided by the above embodiments.

The memory 1804 is configured to store various types of data to support the operation of the electronic device 1800. Examples of such data include instructions for any applications or methods operated on the electronic device 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the electronic device 1800. The power component 1806 may include a power management system, one or more power sources, and any other components associated with the generation, management, and distribution of power in the electronic device 1800.

The multimedia component 1808 includes a display screen providing an output interface between the electronic device 1800 and the user. In some embodiments, the multimedia component 1808 includes a front camera and/or a rear camera. The front camera and the rear camera may receive an external multimedia datum while the electronic device 1800 is in an operation mode, such as a photographing mode or a video mode. Each of the front camera and the rear camera may be a fixed optical lens system or have focal length and optical zoom capability.

The audio component 1810 is configured to output and/or input audio signals. For example, the audio component 1810 includes a microphone (MIC) configured to receive an external audio signal when the electronic device 1800 is in an operation mode, such as a call mode, a recording mode, and a voice recognition mode. The received audio signal may be further stored in the memory 1804 or transmitted via the communication component 1818. In some embodiments, the audio component 1810 further includes a speaker to output audio signals.

The I/O interface 1812 provides an interface between the processing component 1802 and peripheral interface modules, such as a keyboard, a click wheel, buttons, and the like. These buttons may include, but are not limited to, home buttons, volume buttons, start buttons, and lock buttons.

The sensor component 1816 includes one or more sensors to provide status assessments of various aspects of the electronic device 1800. For example, the sensor component 1816 may detect an open/closed states of the electronic device 1800, relative positioning of components, e.g., the display and the keypad, of the electronic device 1800, a change in position of the electronic device 1800 or a component of the electronic device 1800, a presence or absence of user contact with the electronic device 1800, an orientation or an acceleration/deceleration of the electronic device 1800, and a change in temperature of the electronic device 1800. The sensor component 1816 may include a proximity sensor configured to detect the presence of nearby objects without requiring any physical contact. The sensor component 1816 may also include a light sensor, such as a CMOS or CCD image sensor, for use in imaging applications. In some embodiments, the sensor component 1816 may also include an accelerometer sensor, a gyroscope sensor, a magnetic sensor, a pressure sensor, or a temperature sensor.

The communication component 1818 is configured to facilitate communication, wired or wirelessly, between the electronic device 1800 and other devices. The electronic device 1800 may access a wireless network based on a communication standard, such as Wi-F i, 2G, 3G, 4G or 5G, or a combination thereof. In an example embodiment, the communication component 1818 receives a broadcast signal or broadcast associated information from an external broadcast management system via a broadcast channel. In an example embodiment, the communication component 1818 further includes a near field communication (NFC) module to facilitate short-range communication. For example, NFC modules may be implemented based on radio frequency identification (RFID) technology, infrared data association (IrDA) technology, ultra-wideband (UWB) technology, Bluetooth (BT) technology, and other technologies.

In an example embodiment, the electronic device 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above information transmission method.

In an example embodiment, there is also provided a non-transitory machine-readable storage medium including instructions, such as included in the memory 1804, executable by the processor 1820 in the electronic device 1800, for performing the above-described methods for transmitting information. For example, the non-transitory computer-readable storage medium may be a ROM (read-only memory), a RAM (random access memory), CD-ROM (compact disc read-only memory), magnetic tape, floppy disk, optical data storage device, or the like.

Correspondingly, the present disclosure further provides an information transmission device, including:
one or more processors;
a memory for storing a processor-executable instruction;
where the processor is configured to perform the information transmission method according to any one of the above base station side.

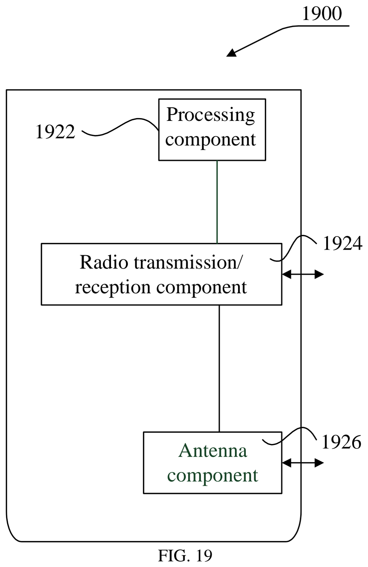

As shown in FIG. 19, FIG. 19 is a schematic structural diagram of an information transmission device 1900 according to an example embodiment. The device 1900 may be provided as a base station. Referring to FIG. 19, the device 1900 includes a processing component 1922, a radio transmission/reception component 1924, an antenna component 1926, and a signal processing portion specific to a radio interface, and the processing component 1922 may further include at least one processor.

One of the processors in the processing component 1922 may be configured to perform any of the above information transmission methods.

Other embodiments of the present disclosure will be apparent to those skilled in the art from consideration of the specification and practice of the present disclosure disclosed herein. The present disclosure is intended to cover any variations, uses, or adaptations of the present disclosure following the general principles thereof and including such departures from the present disclosure as come within known or customary practice in the art. It is intended that the specification and examples be considered as examples only, with a true scope and spirit of the disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

## Claims

1. An information transmission method, performed by a terminal, comprising:
in response to determining that to-be-sent uplink information needs to occupy multiple time units and the multiple time units comprise at least two types of time units, determining, from the multiple time units, a first time unit used for uplink transmission; and
sending the uplink information to a base station in the first time unit.

2. The method according to claim 1, wherein the at least two types of time units comprise:
a first-type time unit, configured with an uplink sub-band, a transmission direction thereof being downlink or flexible; and
a second-type time unit, configured with no uplink sub-band, a transmission direction thereof being uplink or flexible.

3. The method according to claim 2, wherein determining, from the multiple time units, the first time unit used for uplink transmission comprises any one of:
determining the second-type time unit in the multiple time units as the first time unit;
determining the first-type time unit and the second-type time unit in the multiple time units as the first time unit; and
determining the first-type time unit and the second-type time unit in the multiple time units as available time units, and determining the first time unit from the available time units.

4. The method according to claim 2, further comprising:
receiving first indication information sent by the base station, wherein the first indication information indicates that the first time unit comprises any one of:
the second-type time unit; and
the first-type time unit and the second-type time unit.

5. The method according to claim 2, further comprising:
receiving second indication information sent by the base station, wherein the second indication information indicates that an available time unit comprises any one of:
the second-type time unit; and
the first-type time unit and the second-type time unit;
wherein determining, from the multiple time units, the first time unit used for uplink transmission comprises:
determining, from the multiple time units, the available time unit indicated by the second indication information as the first time unit.

6. The method according to claim 2, wherein determining, from the multiple time units, the first time unit used for uplink transmission comprises:
determining, from the multiple time units, the first time unit based on associated information of the uplink information.

7. The method according to claim 6, wherein the associated information comprises a number of time units that need to be occupied for repeated transmission of the uplink information;
wherein determining, from the multiple time units, the first time unit based on the associated information of the uplink information comprises any one of:
in response to determining the number of time units being less than a preset number, determining the second-type time unit as the first time unit;
in response to determining the number of time units being greater than or equal to the preset number, determining the first-type time unit and the second-type time unit as the first time unit; and
in response to determining the number of time units being greater than or equal to the preset number, determining the first-type time unit and the second-type time unit as available time units, and then determining the first time unit from the available time units.

8. The method according to claim 6, wherein the associated information comprises transmission type information of the uplink information;
wherein determining, from the multiple time units, the first time unit based on the associated information of the uplink information comprises:
determining, based on a correspondence between the transmission type information and types of time units, a type of time units corresponding to the transmission type information; and
determining, from the multiple time units, a time unit belonging to the type of time units as the first time unit.

9. The method according to claim 3 or 7, wherein determining the first time unit from the available time units comprises any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

10. An information transmission method, performed by a base station, comprising:
in response to determining that uplink information to be sent by a terminal needs to occupy multiple time units and the multiple time units comprise at least two types of time units, determining, from the multiple time units, a first time unit used for uplink transmission by the terminal; and
receiving the uplink information sent by the terminal in the first time unit.

11. The method according to claim 10, wherein the at least two types of time units comprise:
a first-type time unit, configured with an uplink sub-band, a transmission direction thereof being downlink or flexible; and
a second-type time unit, configured with no uplink sub-band, a transmission direction thereof being uplink or flexible.

12. The method according to claim 11, wherein determining, from the multiple time units, the first time unit used for uplink transmission by the terminal comprises any one of:
determining the second-type time unit in the multiple time units as the first time unit;
determining the first-type time unit and the second-type time unit in the multiple time units as the first time unit; and
determining the first-type time unit and the second-type time unit in the multiple time units as available time units, and determining the first time unit from the available time units.

13. The method according to claim 11, further comprising:
sending first indication information to the terminal, wherein the first indication information indicates that the first time unit comprises any one of:
the second-type time unit; and
the first-type time unit and the second-type time unit.

14. The method according to claim 11, further comprising:
sending second indication information to the terminal, wherein the second indication information indicates that an available time unit comprises any one of:
the second-type time unit; and
the first-type time unit and the second-type time unit;
wherein determining, from the multiple time units, the first time unit used for uplink transmission by the terminal comprises:
determining, from the multiple time units, the available time unit indicated by the second indication information as the first time unit.

15. The method according to claim 11, wherein determining, from the multiple time units, the first time unit used for uplink transmission by the terminal comprises:
determining, from the multiple time units, the first time unit based on associated information of the uplink information.

16. The method according to claim 15, wherein the associated information comprises a number of time units that need to be occupied for repeated transmission of the uplink information;
wherein determining, from the multiple time units, the first time unit based on the associated information of the uplink information comprises any one of:
in response to determining the number of time units being less than a preset number, determining the second-type time unit as the first time unit;
in response to determining the number of time units being greater than or equal to the preset number, determining the first-type time unit and the second-type time unit as the first time unit; and
in response to determining the number of time units being greater than or equal to the preset number, determining the first-type time unit and the second-type time unit as available time units, and then determining the first time unit from the available time units.

17. The method according to claim 15, wherein the associated information comprises transmission type information of the uplink information;
wherein determining, from the multiple time units, the first time unit based on the associated information of the uplink information comprises:
determining, based on a correspondence between the transmission type information and types of time units, a type of time units corresponding to the transmission type information; and
determining, from the multiple time units, a time unit belonging to the type of time units as the first time unit.

18. The method according to any one of claim 12 or 16, wherein determining the first time unit from the available time units comprises any one of:
in response to determining that a frequency-domain resource occupied by the uplink information falls within a frequency-domain resource occupied by the uplink sub-band, determining the first-type time unit as the first time unit; and
in response to determining that any frequency-domain resource occupied by the uplink information falls outside a frequency-domain resource occupied by the uplink sub-band, determining the second-type time unit as the first time unit.

19. An information transmission apparatus, applied to a terminal, comprising:
a first determining module, configured to, in response to determining that to-be-sent uplink information needs to occupy multiple time units and the multiple time units comprise at least two types of time units, determine, from the multiple time units, a first time unit used for uplink transmission; and
a first sending module, configured to send the uplink information to a base station in the first time unit.

20. An information transmission apparatus, applied to a base station, comprising:
a second determining module, configured to, in response to determining that uplink information to be sent by a terminal needs to occupy multiple time units and the multiple time units comprise at least two types of time units, determine, from the multiple time units, a first time unit used for uplink transmission by the terminal; and
a first receiving module, configured to receive the uplink information sent by the terminal in the first time unit.

21. A computer-readable storage medium, wherein the storage medium stores a computer program, and the computer program is used for performing the information transmission method according to any one of claims 1-9.

22. A computer-readable storage medium, wherein the storage medium stores a computer program, and the computer program is used for performing the information transmission method according to any one of claims 10-18.

23. An information transmission device, comprising:
one or more processors;
a memory for storing a processor-executable instruction;
wherein the one or more processors are configured to perform the information transmission method according to any one of claims 1-9.

24. An information transmission device, comprising:
one or more processors;
a memory for storing a processor-executable instruction;
wherein the one or more processors are configured to perform the information transmission method according to any one of claims 10-18.
